Europäisches Patentamt

(19) European Patent Office

Office européen des brevets

(11) Numéro de publication: **0 147 272**
A1

(12) # DEMANDE DE BREVET EUROPEEN

(21) Numéro de dépôt: **84402430.7**

(22) Date de dépôt: **28.11.84**

(51) Int. Cl.⁴: **B 60 C 27/04**
B 60 C 27/10, B 60 C 27/08

(30) Priorité: **28.11.83 FR 8318907**

(43) Date de publication de la demande:
**03.07.85 Bulletin 85/27**

(84) Etats contractants désignés:
**AT BE CH DE FR GB IT LI NL SE**

(71) Demandeur: **Gourhant, Robert**
**3, rue Charles Péguy**
**F-77500 Chelles(FR)**

(72) Inventeur: **Gourhant, Robert**
**3, rue Charles Péguy**
**F-77500 Chelles(FR)**

(54) **Dispositif d'adhérence à crampons pour roues de véhicules automobiles.**

(57) L'invention concerne un dispositif d'adhérence à crampons pour roues de véhicules automobiles, pouvant être monté ou démonté rapidement, permettant de se déplacer sur des sols enneigés ou boueux.

Il est constitué de crampons (62) articulés sur des bras radiaux (1), (1'), (2), (2'), (3), (3') guidés par paires dans des plaques pivotant autour de l'axe (10) au montage et vérrouillées ensuite entre elles par les griffes de la plaque (9). Les crampons (62) sont déplaçables sur les bras suivant la largeur du pneumatique.

Les bras sont commandés radialement par des crémaillères en contact, au serrage, avec des butées fixées sur les dits bras. Ainsi, ils peuvent se déplacer indépendamment les uns des autres quand le sol appuie sur un crampon (62) et écrase le pneu. Les crémaillères sont engrénées avec un barillet commandé en rotation, grâce à un mécanisme à friction, par un moyeu (14) comportant une poignée rigide pivotante (15) permettant une liaison avec la plaque (9) après serrage.

FIG. 3

La présente invention concerne un dispositif d'adhérence accessoire pour roues de véhicules automobiles en vue de se déplacer sur des sols enneigés, glacés, boueux ou sablonneux. Ce dispositif peut être monté ou démonté facilement sur des pneumatiques, de diamétres et de largeurs différents, ceci sans déplacer le véhicule concerné et, lorsque ce dernier roule sur une neige dure ,par exemple, la souplesse du dispositif n'entraine pas de vibrations supérieures à celles provoquées par des chaînes.

Il est connu d'employer des dispositifs à quatre sabots liés rigidement par quatre barres formant une croix(brevet n° 1588627) . Chaque barre est coulissante longitudinalement dans des trous réalisés dans un boitier central constitué de deux parties. Leur déplacement est commandé par des roues dentées en prise directement avec les parties dentées des barres, ces roues dentées pouvant tourner grâce à l'action exercée sur une poignée à ressort; Cette poignée peut ensuite s'accrocher à l'un des bras pour maintenir les sabots serrés sur le pneu. Ces sabots entourent partiellement et transversalement le pneu et prennent appui latéralement sur les flancs de ce dernier. Les deux moitiés de boitiers peuvent tourner l'une par rapport à l'autre de façon à amener les quatre bras parallèles pour le montage , le démontage et le rangement.

Ce dispositif présente un grave inconvénient. Les quatre bras, comportant une partie dentée en prise directement avec le ou les engrenages liés ensemble, ne peuvent avoir de mouvements indépendants les uns par rapport aux autres . Pour cette raison, lorsqu'un sabot entre en contact avec le sol, le pneu s'écrase sous le poids du véhicule et le bras correspondant ne peut suivre ce mouvement car il ne peut déplacer simultanément les trois autres portant sur des parties non applaties du pneu. Cela provoque une sollicition importante au flambage dans la dite barre. Pour cette raison, elles doivent posséder des sections relativement importantes et être réalisées en acier ou tout autre matériau ayant une limite élastique équivalente, ce qui exclut les matiéres plastiques ou les alliages d'aluminium .

D'autre part, le bras se présente à 30° environ en avant de la verticale lorsque le sabot prend contact avec la route. De ce fait ,ce dernier faisant suite rigidement à la barre.est donc incliné par rapport au sol, ce qui entraine une déformation importante du pneumatique et un choc désagréable particuliérement sensible sur sol dur.

Ces deux défauts font que,sur une neige tassée ou sur une route partiellement déneigée,les vibrations transmises au véhicule sont telles que le dispositif doit être démonté aussitôt.

Il est connu du brevet N° 2 324 474 un dispositif de vérrouillage des deux boitiers améliorant celui du systéme précédent au niveau de la facilité de montage et de démontage.

Ce dispositif est caractérisé par des parties alternativement saillantes et rentrantes sur les deux faces en regard des deux boitiers . Ces rainures rayonnent à partir de l'axe et elles nécessitent un systéme presseur les maintenant en contact .

Ce dispositif présente l'inconvénient d'augmenter l'épaisseur des boitiers d'une valeur égale à la hauteur des rainures.

Cette solution implique obligatoirement que les barres soient guidées dans des trous réalisés dans les boitiers perpendiculairement à l'axe de l'engrenage pour conserver intégralement les faces en vis à vis des dits boitiers.

Cela donne des formes relativement complexes pour l'obtention de ces piéces par fonderie (présence de noyaux).De plus, cette solution rend les deux boitiers complétement liés ce qui fait que les déformations latérales des barres (virages, défauts de positionnement des crampons sur les pneumatiques) se traduisent par des contraintes dans les boitiers au voisinage des trous de guidage des barres.

Quant au systéme presseur, on peut remarquer qu'il fournit simultanément ,par l'intermédiaire d'un disque en forme de came prenant appui sur une goupille solidaire du boulon central assemblant les deux boitiers,une force tangentielle faisant tourner l'engrenage et un effort axial appliquant les deux boitiers l'un contre l'autre grâce à l'action de la tête du boulon sur l'un des deux,et à l'action du ressort sur l'autre.

Le système à came lie ces deux forces et toute augmentation de la force tangentielle nécessaire à la rotation de l'engrenage et au serrage des bras entraine une augmentation de la force axiale du ressort sur le boitier.

En fin de serrage , la tête de boulon central, appliquée fortement sur le boitier par l'effort axial exercé sur la goupille ,a en même temps un petit mouvement de rotation par rapport à ce boitier  car les crampons compriment légérement le pneumatique.Cela entraine des forces de frottement assez importantes qui s'opposent au couple de serrage exercé sur le pignon et réduisent donc son efficacité.

L'utilisateur sera donc amené à augmenter son effort sur la poignée à ressort ,ce qui présente des risques de détente brusque lors de son accrochage ou son décrochage pouvant entrainer des blessures.

Enfin, ce dispositif n'apporte aucune solution au défaut de rigidité radiale mentionné auparavant.

Le brevet Européen N° 0 011 888 décrit un système introduisant notamment une mobilité radiale des crampons lors de l'écrasement du pneu.

Il est composé d'au moins cinq étriers tirés par un nombre égal de coulisseaux guidés radialement dans un carter comportant cinq rainures.Un disque ,guidé en rotation dans ce carter ,manoeuvre les coulisseaux grâce à une spirale en saillie engagée dans des creux de ces derniers .L'effort ainsi éxercé est puissant et le mouvement est irréversible.

Le carter ,ayant pour fonction de guider ce disque ainsi que les cinq coulisseaux, comporte des formes relativement complexes et des dimensions radiales importantes, ce qui augmente la quantité de matiére nécessaire à son obtention, son inertie et son encombrement pour le rangement. A cela, vient s'ajouter le dispositif permettant la mobilité de l'étrier par rapport au coulisseau.

Il a été obtenu en introduisant des surfaces de guidage entre ces deux piéces pour assurer leur déplacement relatif en translation. Les surfaces assurant le guidage du coulisseau dans le carter,et celles permettant le déplacement des étriers par rapport au coulisseau sont situées successivement sur un même rayon ce qui augmente encore la complexité du dispositif et son encombrement radial pour le rangement.

La présente invention a pour but principal de remédier aux inconvénients de rigidité radiale des dispositifs connus, montables sans déplacer le véhicule ,ceci sans augmenter notablement leur complexité,dispositifs possédant quatre crampons ou plus tirés par un nombre égal de bras montés coulissants/dans deux boitiers ou plus,ces boitiers pouvant tourner l'un par rapport à l'autre autour d'un axe coaxial à la roue et se vérrouiller angulairement pour le montage ou le rangement,les bras étant déplacés longitudinalement par des engrenages en prise avec des crémailléres.

La caractéristique essentielle de l'invention est que, les crampons et les bras associés ,une fois serrés sur le pneu, peuvent se déplacer radialement indépendamment les uns des autres lorsqu'ils prennent contact avec le sol,grâce à une mobilité des bras vers le centre de la roue par rapport aux crémailléres correspondantes.Ces crémailléres sont en prise avec le ou les pignons qui,eux,demeurent calés angulairement.

Le déplacement indépendant des bras vers l'extérieur de la roue est rendu impossible par le contact de l'extrémité opposée aux crampons de chaque crémaillére sur une butée solidaire du bras correspondant.Cette butée peut occuper différentes positions sur le bras suivant les différents diamétres des pneumatiques.

Le contact des crémailléres sur les butées assure le déplacement longitudinal de ces derniers dans le sens du serrage.Ce contact est rompu lorsque le crampon touche le sol et il se rétablit automatiquement grâce à l'élasticité du pneu qui repousse les bras vers l'extérieur.

Les crémailléres et les bras correspondants sont montés coulissants dans les mêmes rainures paralléles de guidage longitudinal réalisées dans des plaques constituant le boitier central,ce qui n'entraine pas d'augmentation importante des dimensions radiales et transversales des dites plaques et leur conserve des formes relativement simples.

Afin de réduire les efforts et donc l'usure entre les champs des bras et les rainures de guidage pendant la
période où le crampon est en contact avec le sol et     le
bras se déplace,il a été prévu,dans une forme de réalisation
préférentielle,une mobilité angulaire de 60° environ du dit
crampon  autour de la partie du bras située transversalement
et parallélement à la bande de roulement du pneumatique.

        Ainsi ,lorsque le crampon prend contact avec un sol
dur,ou quitte ce dernier ,il ne reste pas incliné comme
le bras correspondant.Sous le poids du véhicule ,il se met
à plat sur la route .Le crampon ayant une section en U et
la dite partie du bras étant glissée entre les branches du
U,le poids du véhicule s'exerce sur ces derniéres et non sur
les bras , ce qui n'entraine aucun effort supplémentaire sur
les rainures de guidage.

        Cette mobilité réduit par la même occasion la   déformation du pneu et le choc du crampon au début du contact,
ce qui améliore encore le confort des passagers. Le fond du
U du crampon présente dans son plan de symétrie une partie
bombée qui touche le pneu suivant une ligne transversale
et deux surfaces légérement inclinées de part et d'autre de
ce contact,qui s'éloignent progressivement du pneu et se raccordent sur les ailes du U.Sur neige molle, celle -ci se glisse entre le crampon et le pneu dans la partie où il n'y a
pas contact et, par effet de coin, fait  tourner le crampon
dans le sens  inverse de celui décrit précédemment,ce qui
le redresse et augmente sa hauteur latérale et donc sa capacité d'accrochage dans la neige.

        Pour que ces oscillations dans les deux sens soient
possibles,il faut que la partie recourbée du crampon en appui sur le flanc du pneu et positionnant latéralement le dit
crampon puisse aussi se déplacer  angulairement avec un frottement minimum lorsque le pneu s'écrase.Il est donc hors de
question que cette partie recourbée s'oppose au gonflement
latéral du pneu qui accompagne son écrasement, ce qui provoquerait des bourrelets de part et d'autre de la dite partie
s'opposant à son déplacement  angulaire .A cette fin, cette
partie recourbée  présente une forme arrondie plus large que
le pneu écrasé  permettant son libre gonflement dans une zone proche  de la bande de roulement.Le contact  de positionnement latéral s'effectue plus haut,sur la partie la plus renflée du pneu non écrasé.Pour des raisons de symétrie d'efforts ,la partie du bras en vis à vis présente les mêmes formes.

La liberté radiale des bras,lorsque le véhicule roule, implique,dans une forme de réalisation préférentielle,que les plaques de guidage constituant le boitier central puissent osciller à tour de rôle de quelques degrés autour d'un axe contenu dans le plan des bras correspondants et perpendiculaire au champ de ces derniers afin d'éviter tout risque d'arc-boutement des bras dans les rainures de guidage,et de limiter l'usure et les contraintes.

Ces risques sont surtout sensibles sur des sols bombés ou inclinés sur le côté ou dans les virages car,le pneumatique ,en se déformant dissymétriquement,écarte les bras à tour de rôle du plan vertical lorsqu'ils se trouvent dans la zone d'écrasement du pneu.C'est précisément dans cette zone qu' ils doivent se déplacer radialement sans arc-boutement.

A cette fin , les centrages des plaques sur l'axe central coaxial à la roue se font par l'intermédiaire de liaisons rotules et les faces en vis à vis ne se touchent pas car des rondelles entretoises les maintiennent écartées. Leur vérrouillage angulaire est réalisé par des griffes appartenant à la plaque extérieure,pouvant se déplacer axialement avec cette dernière pour supprimer ou établir le contact avec les champs paralléles aux bras des dites plaques, tout en conservant l'oscillation autour d'un axe qui leur est perpendiculaire.

L'entrainement en rotation du pignon,ou tout autre systéme déplaçant les crémailléres,se fait de l'extérieur du dispositif,à partir d'un organe de commande pouvant tourner autour de l'axe central et comportant une poignée.La transmission du couple de serrage est réalisée,de l'organe de commande au mécanisme central,par un systéme à friction constitué ici par une ou plusieurs rondelles élastiques tronc-conique placées entre ces deux organes.Ce systéme à friction n'applique aucun effort sur les plaques car il ne prend pas appui directement ou indirectement sur l'une d'elles et ne s'oppose donc pas à leur libre oscillation.

Enfin, pour compléter les dispositions précédentes, toujours dans une forme de réalisation préférentielle, l'invention est caractérisée par le fait que le crampon peut, lui aussi ,osciller de quelques degrés autour d'un axe horizontal longitudinal au véhicule par rapport au bras,afin de limiter l'écartement de ce dernier par rapport au plan vertical sur les sols bombés ou en creux,donc de réduire les risques d'arc-boutement des bras.Pour cela ,on a intercalé une rondelle entre la partie du bras pliée parallélement et transversalement à la bande de roulement et le fond interne du U du crampon.Un axe,engagé dans l'un des trous réalisés dans la dite partie du bras et dans le crampon,relie ces deux piéces avec jeu.Les différents trous permettent un réglage de la position du crampon sur le bras suivant les différentes largeurs du pneumatique.

Cette oscillation du crampon par rapport au bras permet une légère ouverture de la partie recourbée du dit crampon qui facilite l'engagement de ce dernier au montage.

Les caractéristiques de l'invention qui viennent d'être présentées,considérées ensemble ou suivant toutes les combinaisons possibles, sont liées à la mobilité radiale des bras ,lorsque le véhicule roule.Elles réduisent par la même occasion les contraintes dans les barres et les plaques et rendent le dispositif d'adhérence plus souple,ce qui augmente le confort des passagers.

A ces caractéristiques viennent s'en ajouter d'autres qui complétent le dispositif.

Le guidage des bras dans les plaques centrales se fait dans des rainures débouchant sur les faces des plaques,et leur vérrouillage se fait par des griffes prenant appui sur leurs champs,ce qui permet de réduire leur épaisseur notablement.

On peut donc envisager maintenant une réalisation du dispositif d'adhérence comportant une troisiéme plaque coaxiale aux deux premières,et placée entre elles,permettant de guider deux nouveaux bras,donc de porter leur nombre total de quatre à six,sans augmenter notablement l'épaisseur du boitier central.Cette solution a l'avantage d'assurer une meilleure stabilité du dispositif d'adhérence sur la roue car, lorsqu'un bras est déplacé par la compression du pneu,il n'assure plus de maintien vers le haut.Dans les dispositifs à quatre crampons,seul le serrage des deux bras qui sont perpendiculaires au bras déplacé assure le maintien en position,ce qui peut se révéler insuffisant à grande vitesse.

De plus,six crampons assurent une continuité plus grande de l'accrochage de la roue sur la neige ou sur la glace.

Le dispositif possède d'autre part un mécanisme central de serrage composé de crémaillères et d'un barrillet ayant , à résistance égale,un encombrement radial plus faible qu'un pignon ,ce qui fait que la manoeuvre du dispositif s'effectue avec un effort réduit.

Le systéme à friction,décrit précédemment,placé entre le barillet et l'organe de commande,autorise un glissement angulaire de ce dernier,lorsque le barillet est arrêté au serrage,par le contact des crampons sur la bande de roulement du pneu.Ce glissement permet la recherche de la position de vérrouillage de l'organe de commande.Ce dernier comporte,de ce fait,une poignée rigide pour son entrainement en rotation et un crochet solidaire de cette dernière .Ce crochet vient prendre appui sur l'une des nervures de la plaque extérieure par rotation,réalisée préférentiellement autour de l'axe de la dite poignée,pour assurer le maintien en position de l'organe de manoeuvre,les crampons étant serrés sur la roue.

Une forme de réalisation d'un dispositif d'adhérence accessoire pour pneus de véhicules automobiles,comportant six bras et trois plaques ,suivant l'invention,sera décrite plus en détail dans ce qui suit,à titre d'exemple non limitatif ,en référence aux dessins annexés, dans lesquels:

La figure 1 est une vue en perspective du dispositif plié ,en cours d'engagement latéral sur le pneu.

La figure 2 est une vue en perspective du dispositif lors du vérrouillage des deux premières paires de bras entre elles

La figure 3 est une vue en perspective du dispositif lors du vérrouillage des deux deuxièmes paires de bras entre elles,une paire de cette deuxième étant commune avec la première .

0147272

La figure 4 est une vue latérale en coupe selon AA de la figure 6 de la partie centrale du dispositif.

La figure 5 est une vue en perspective éclatée des trois plaques faisant partie du mécanisme central, montrant notamment les griffes de vérrouillage et une paire de bras et de crémaillères.

La figure 6 est une vue de face en coupe selon BB de la figure 4 dè la partie centrale du dispositif montrant les plaques vérrouillées.

La figure 7 est une vue en perspective éclatée, montrant la plaque côté roue, deux paires de bras, les crémaillères, et le barillet tournant de la partie centrale.

La figure 8 est une vue en perspective éclatée d'un premier exemple de réalisation du crampon oscillant, conforme à l'invention.

La figure 9 est une vue en bout, en coupe selon DD, de la fig 8 du crampon non incliné et du bras.

La figure 10 est une vue en bout, en coupe selon DD, du crampon incliné et du bras.

La figure 11 est une vue latérale en coupe selon CC de la figure 12 d'un deuxième exemple de réalisation du crampon oscillant et du bras, conforme à l'invention, en place sur le pneumatique non écrasé.

La figure 12 est une vue en bout, en coupe selon EE de la figure 11 du crampon et du bras

La figure 13 est une vue de dessus du bras de la figure 11, représenté seul.

La figure 14 est une vue latérale en coupe selon CC semblable à la figure 11 du crampon et du bras, le pneu étant écrasé.

La figure 15 est une vue latérale de la partie recourbée du crampon, en coupe selon CC, d'un troisième exemple de réalisation du dit crampon, conforme à l'invention.

Les figures 16, 17, 18, 19, sont des vues en bout, et en coupe selon DD, de la figure 11 de différentes positions du crampon par rapport au bras, selon la deuxième forme de réalisation, lors du contact avec le sol:

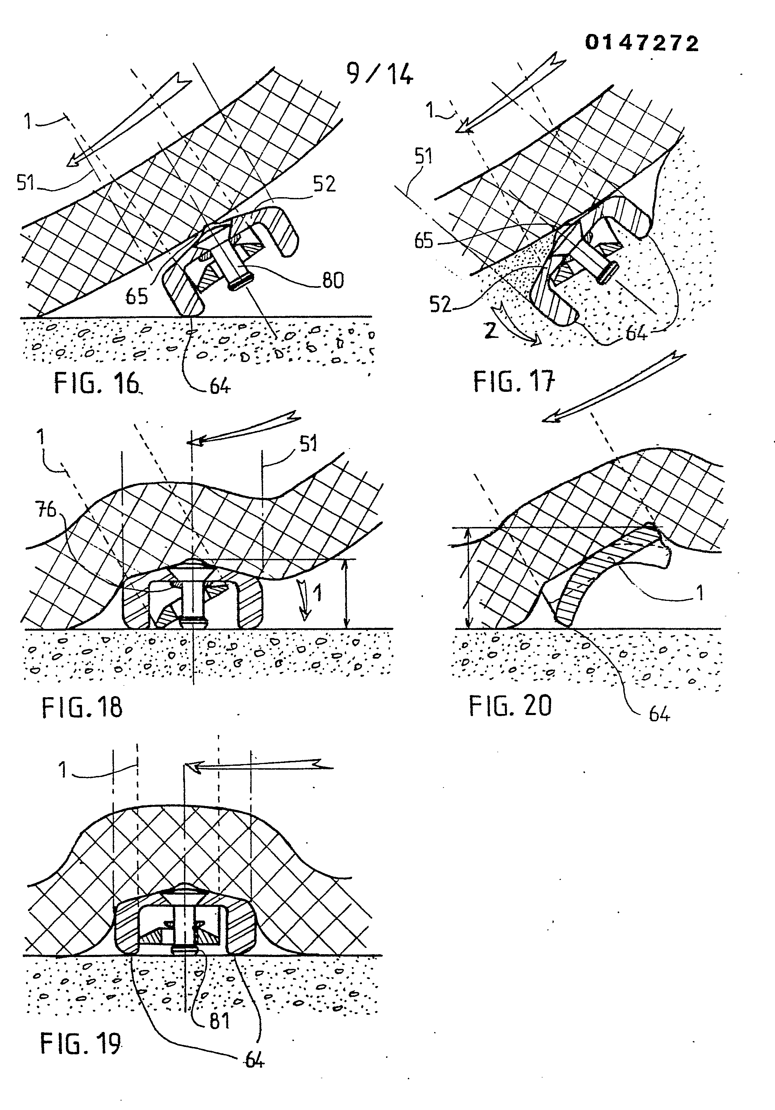

La figure 16 montre le crampon juste avant d'être pincé par le pneu

La figure 17 montre la position du crampon sur une neige non tassée au début du pincement.

La figure 18 montre la position du crampon sur un sol dur au début du pincement .

La figure 19 montre la position du crampon sur un sol dur , le bras étant vertical.

La figure 20 est une vue en bout ,en coupe selon DD du crampon,selon la technique existante, au début du pincement.

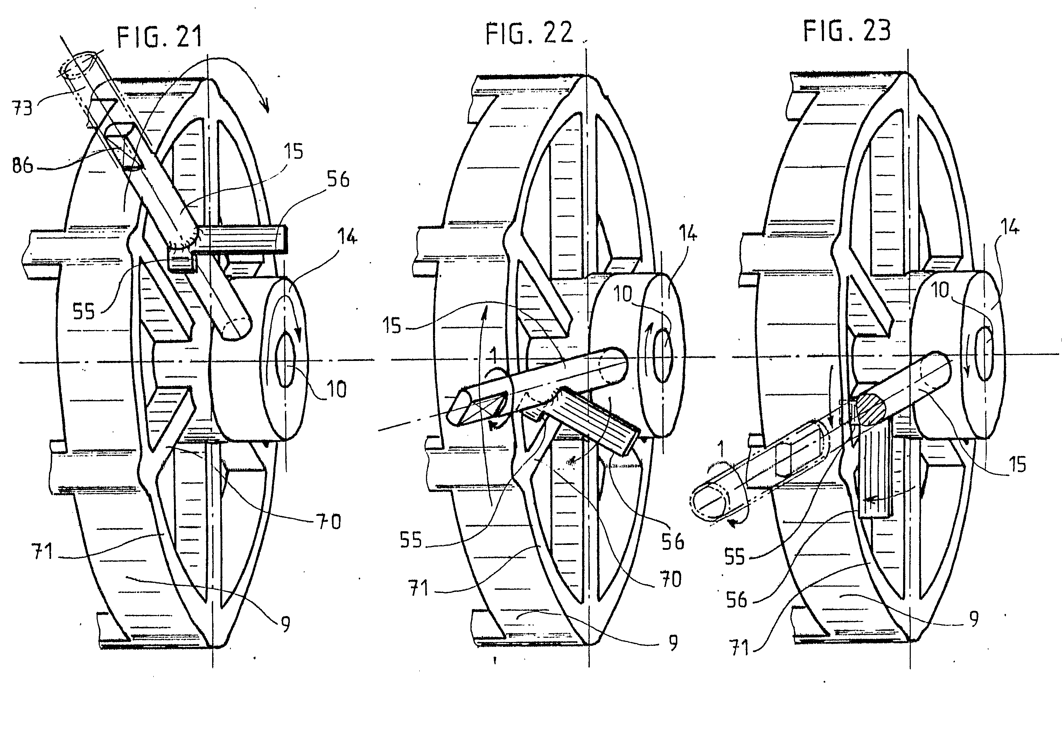

La figure 21 est une vue en perspective du côté extérieur de la plaque à griffes montrant le crochet,au cours du serrage,pivoté autour de l'axe de la poignée de telle sorte qu'il n'accroche pas les nervures.

La figure 22 montre le même crochet en pivotement autour de l'axe de la poignée au cours de l'accrochage.

La figure 23 montre le crochet en appui sur une nervure ,les bras ne pouvant plus alors se desserrer.

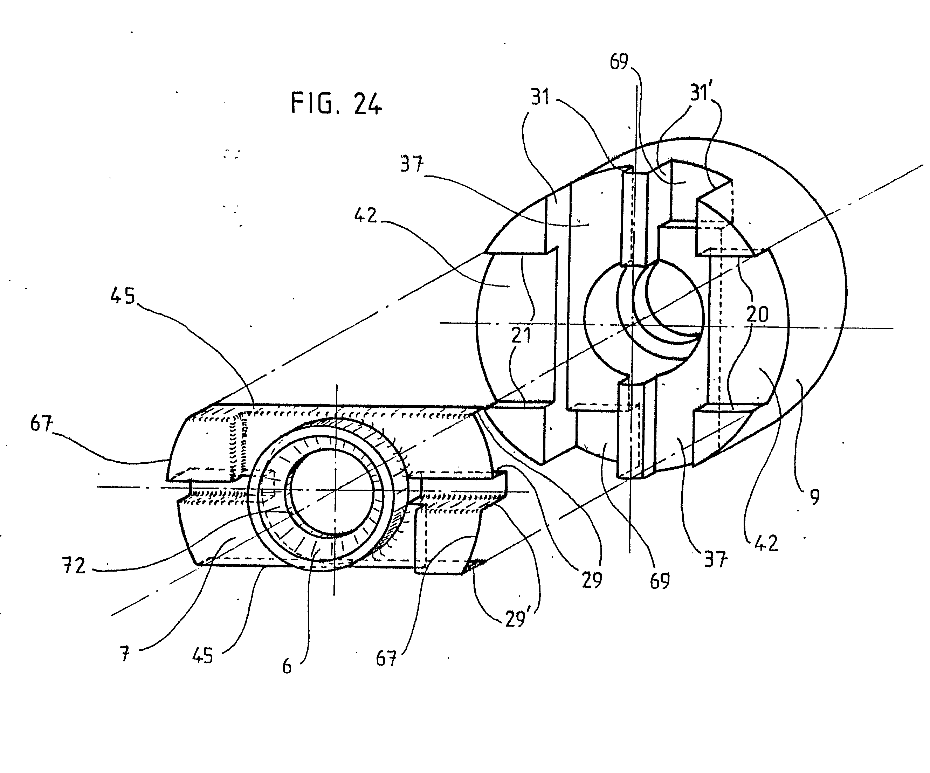

La figure 24 montre ,à titre d'exemple,une vue en perspective éclatée d'une variante de réalisation du dispositif conforme à l'invention,comportant quatre bras et deux plaques,l'une d'elles étant emboutie.

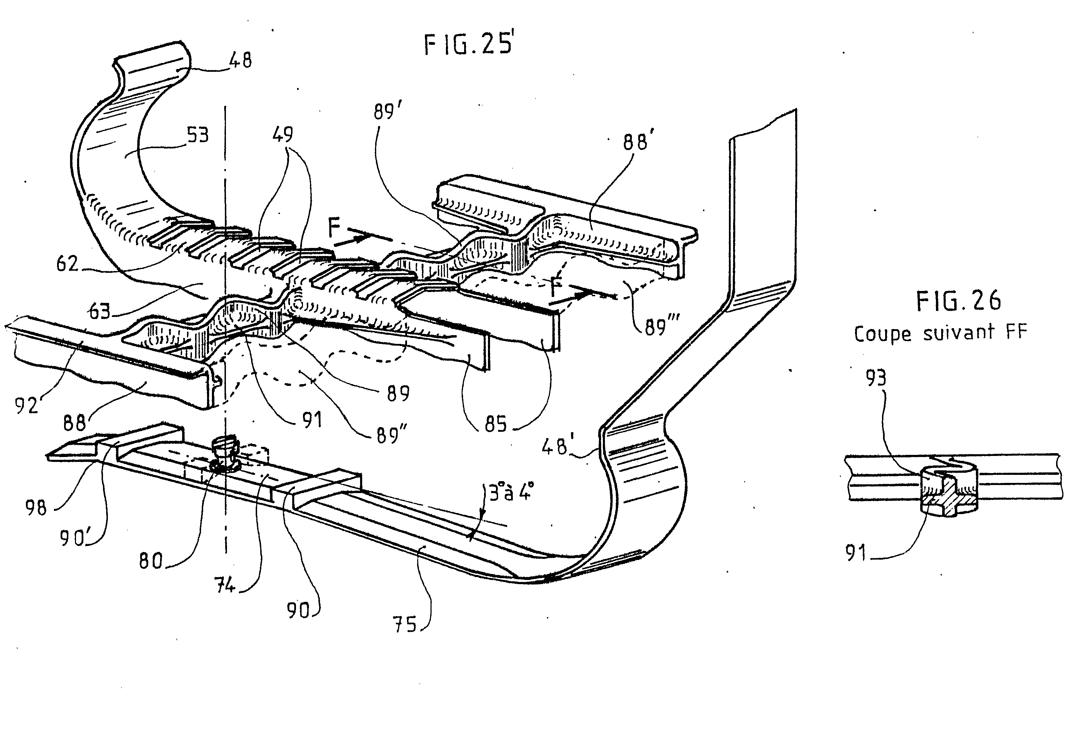

La figure 25 est une perspective éclatée d'une variante de réalisation par moulage du crampon oscillant possédant deux crampons additionnels et une variante du mode de liaison au bras.

La figure 26 est une vue latérale en coupe suivant FF de la figure 25 montrant la géométrie de la branche liant les crampons additionnels .

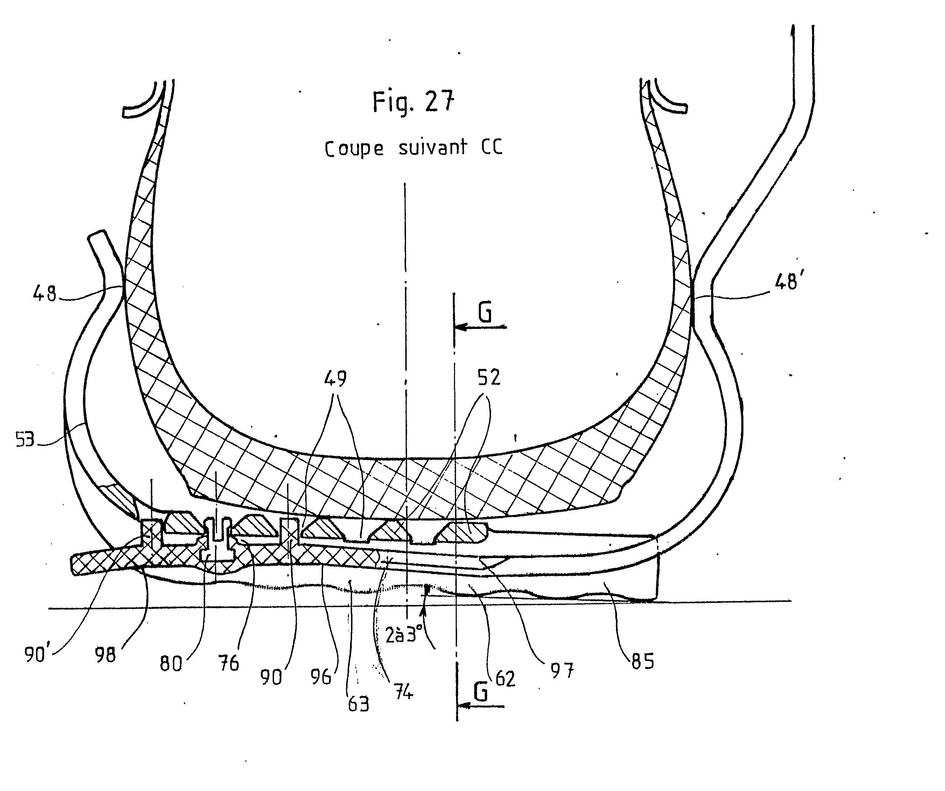

La figure 27 est une vue latérale en coupe suivant CC de la variante de liaison du crampon et du bras.

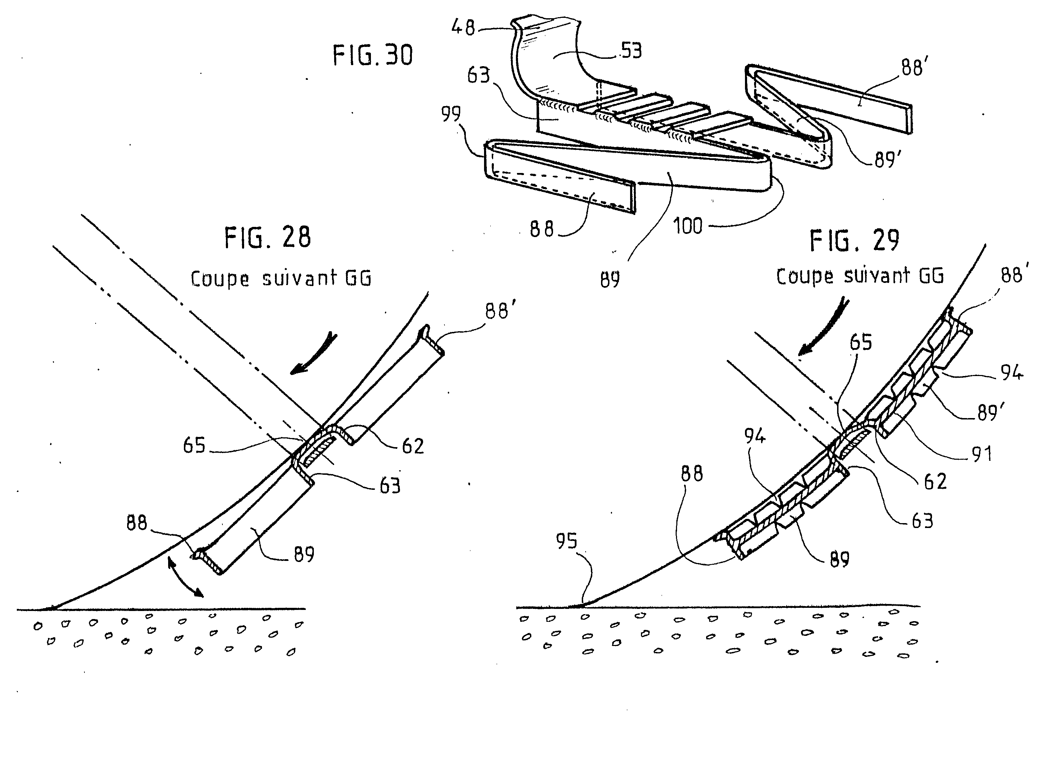

La figure 28 est une vue en bout et en coupe suivant GG de la figure 27   du crampon oscillant possédant deux crampons additionnels liés rigidement ,l'ensemble étant monté sur le pneu.

La figure 29 est une vue en bout et en coupe suivant GG de la figure 27 du crampon oscillant possédant deux crampons additionnels liés par une branche souple ,l'ensemble étant monté sur le pneu .

La figure 30 est une vue en perspective d'une variante de réalisation par pliage du crampon oscillant et de ses crampons additionnels .

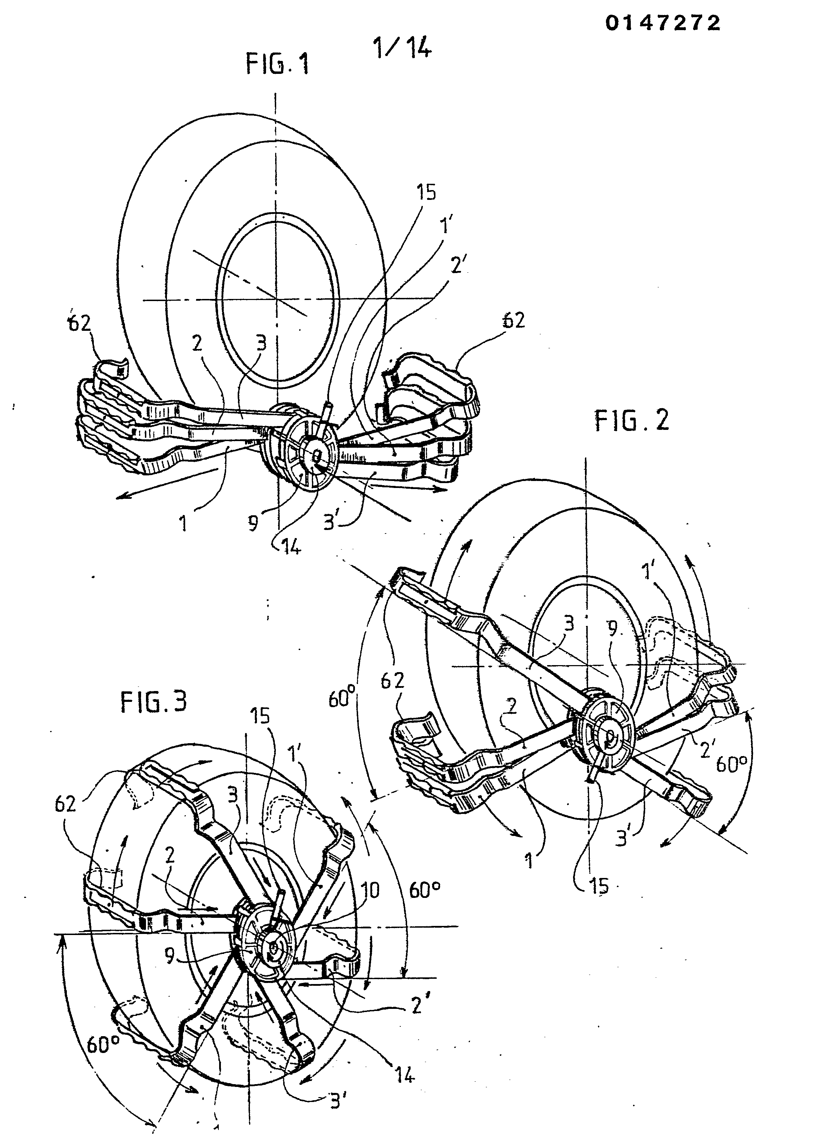

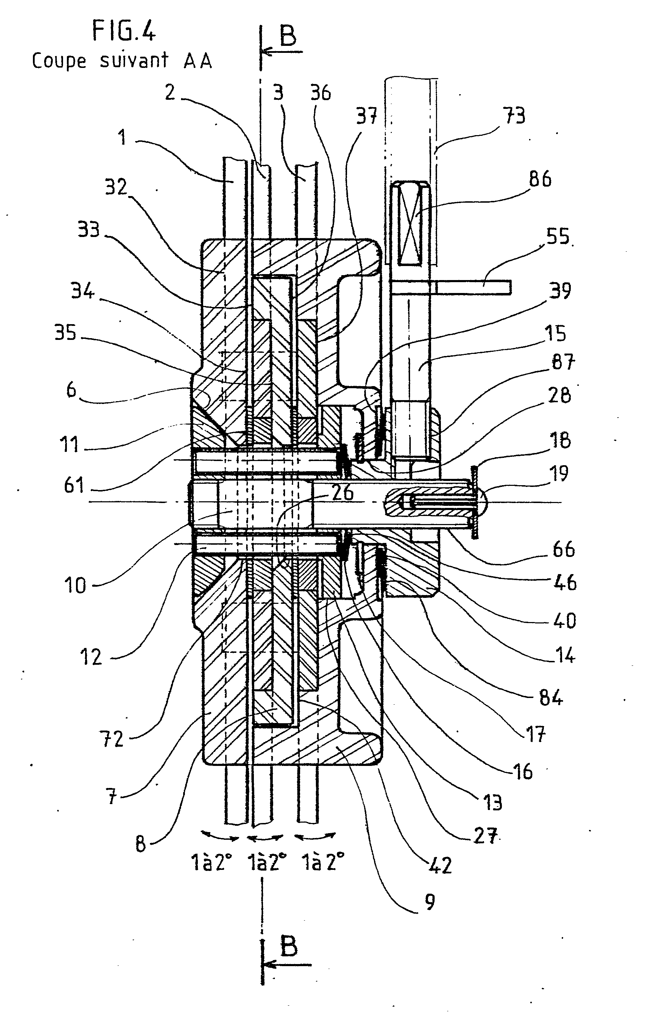

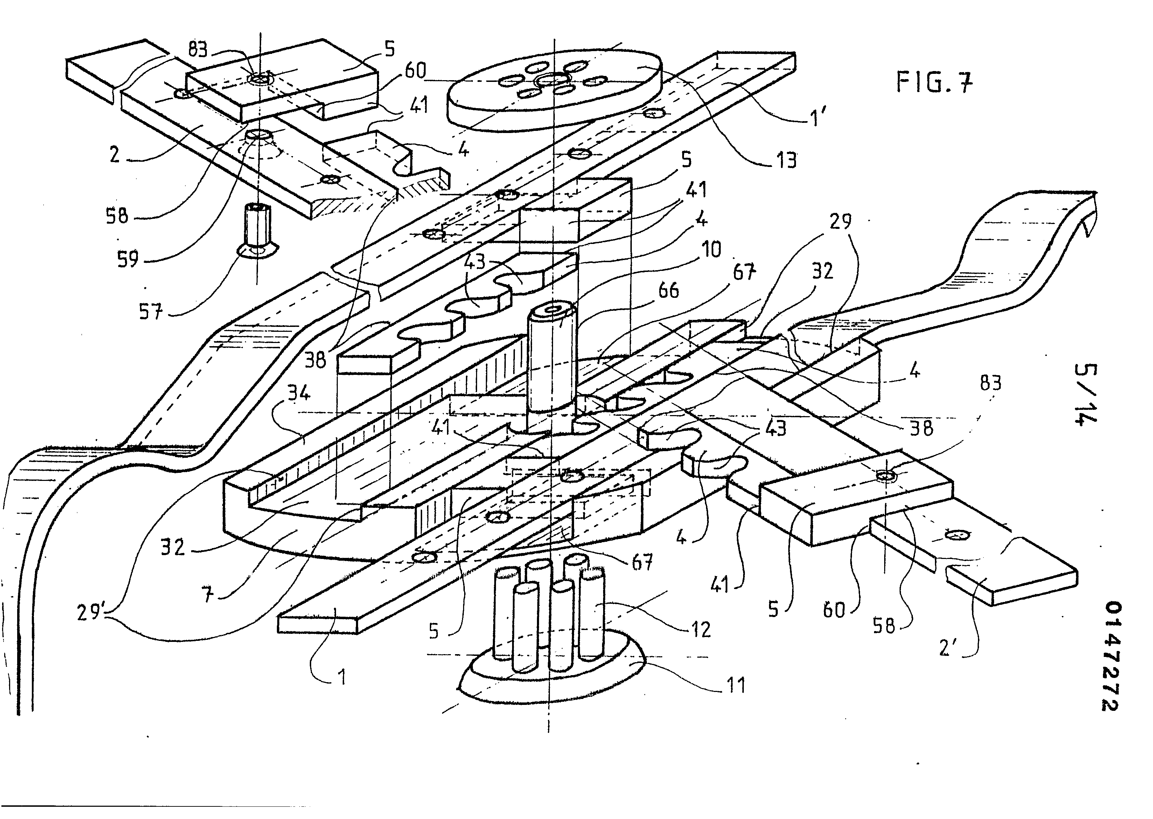

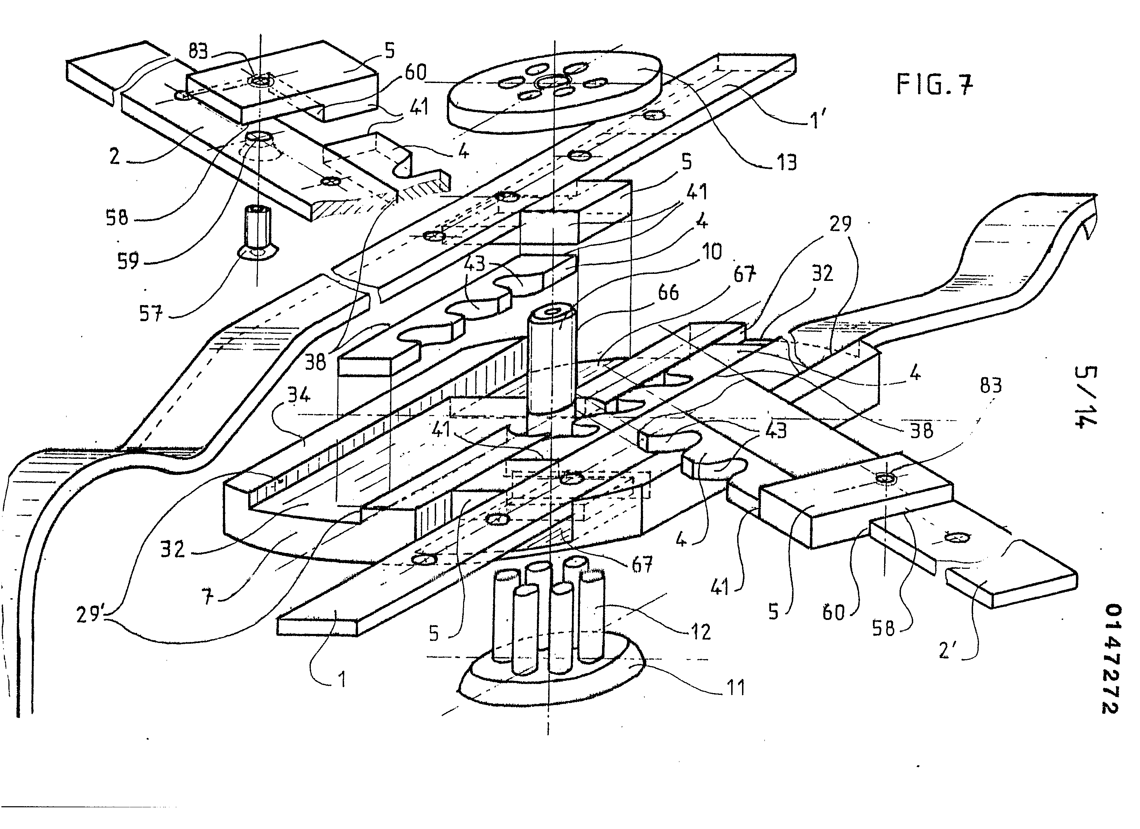

La mobilité radiale des bras ,pendant le roulement, caractéristique essentielle de l'invention ,apparaît dans les figures 4,5,6, 7.

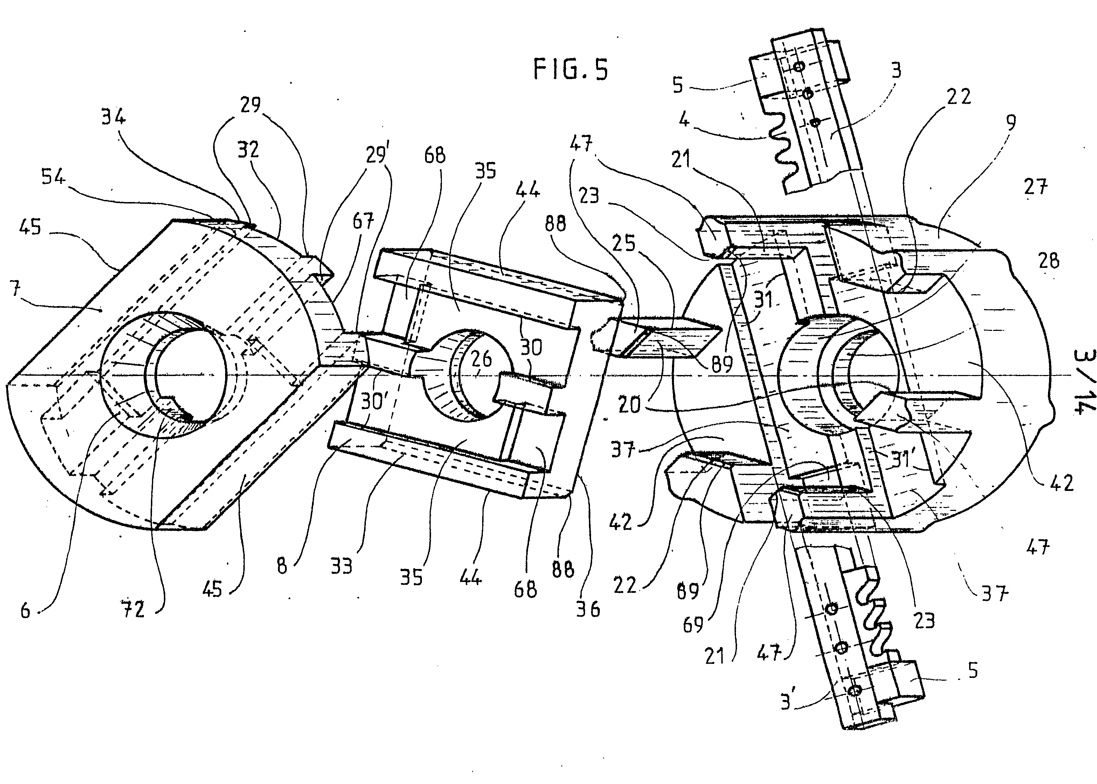

Le bras (1) et la crémaillère (4) ,distincte du bras, sont contenus dans une rainure réalisée dans la plaque côté roue (7) qui fait partie du boitier central;(1) et (4) sont maintenus dans un plan sensiblement vertical par la grande face (32) du fond de la rainure et la face en saillie (33) de la plaque voisine médiane (8);les deux côtés parallèles(29) de la rainure réalisent le guidage de (1) et (4) selon leur axe longitudinal.(fig 5)

Le mécanisme central de commande des crémaillères est un barillet composé de deux flasques parallèles(11) et (13) fixés sur l'axe (10),coaxial à la roue au moyen de filetages, par exemple ,et reliés entre eux par six axes (12) encastrés à espace régulier dans les dits flasques,sur un cercle de petit diamètre .Lorsque le mécanisme est commandé en rotation de l'extérieur ,dans le sens des aiguilles d'une montre ,par un dispositif que l'on expliquera plus loin, les axes(12) prennent appui à tour de rôle sur les dents (43) de la crémaillère (4) et elle se déplace longitudinalement .L'extrémité (41) opposée au crampon de la dite crémaillère, entre en contact avec la butée (5) liée au bras (1) .

Selon une première forme de réalisation , la butée (5) sera liée de façon permanente au bras par une soudure si le bras est en acier ou en alliage d'aluminium ,ou monobloc avec ce dernier si le bras est obtenu par moulage .

Selon une deuxième forme de réalisation,la butée (5) comportera une liaison démontable avec le bras afin de permettre une plus grande plage de réglage selon les différents diamètres de pneumatiques .Par la suite ,seule cette deuxième forme de réalisation sera décrite .

Cette liaison démontable est réalisée par une vis (57), par exemple ,passant dans un trou (83) et l'un des trous (59) réalisés dans le plan médian de (1) et appliquant la face (58) de(5) contre la face de (1).L'appui de la face (60) contre le champ de (1)empêche (5) de tourner autour de (57).

L'action de(4) sur (5) déplace donc le bras (1) et/réalise le serrage du crampon sur le pneumatique.

Les différents trous (59) dans (1) permettent un réglage de la position de (5) par rapport à (1) selon les différents diamètres du pneumatique.

Le mécanisme à barillet présente un petit diamétre et permet donc une distance trés faible entre les paires de crémaillères(4).A pas circonférentiel égal,et donc à résistance égale,un engrenage serait nettement plus encombrant car il comporterait un nombre de dents plus élevé afin d'éviter les interférences d'engrénement et de taillage .

Le bras de levier de la force exercée par un axe (12) sur une dent de (4) étant diminué, à serrage égal, exercé par l'utilisateur,la force sur le bras sera supérieure.

(7) comporte une autre rainure paralléle à celle décrite précédemment (29'), (32') qui,combinée avec la face (33) appartenant à (8) guide un autre bras (11') et une autre crémaillère (4').

Par la suite ,toutes les crémaillères auront pour repères (4) ou (4') et les butées (5).

(8) comporte deux rainures dont les faces latérales paralléles (30),(30') assurent l'orientation angulaire de l'axe longitudinal des bras(2)et(2') à60° par rapport à (1) et(1').Les fonds (35) et les faces en saillie(34) de (7) maintiennent(2),(2') et (4),( 4')dans un plan sensiblement vertical médian à l'appareil.

La plaque externe (9) comporte deux rainures dont les faces latérales paralléles (31)et (31') assurent l'orientation angulaire de l'axe longitudinal des bras (3) et (3') et des crémailléres (4) et (4') décalé à 60° par rapport à (2) et(2');les fonds (37)et la face (36) appartenant à (8) maintiennent (3),(3'),(4),(4') dans un plan sensiblement vertical externe à l'appareil.

Ce type de positionnement a l'avantage de réduire au minimum l'épaisseur du mécanisme central et de donner pour les trois plaques (7),(8),(9),des formes pouvant s'obtenir de fonderie sans noyaux trés simplement avec peu ou pas d'usinages ultérieurs. Dans ce cas ,elles seront réalisées en alliage d'aluminium ou en matière plastique (par exemple une résine acétal ).

On peut envisager aussi l'obtention de (7) et (8) en tôle emboutie avec un traitement anti-corrosion des surfaces(un cadmiage par exemple) (voir fig 24)

Ainsi guidés ,les bras (1'),(2),(2'),(3),(3') se déplacent de la même façon que (1) grâce aux crémaillères (4) et (4')en prise avec le même mécanisme à barillet et en appui sur les butées (5).Le serrage est donc simultané et l'appareil se centre automatiquement sur le pneumatique.Le barillet est ensuite calé angulairement dans la position de serrage maximum par un dispositif que l'on expliquera plus loin.

Lorsque le pneu s'écrase dans la zone où se trouve le bras (1), par exemple,celui-ci se met à glisser contre les faces (29) et (32) de (7)et le champ(38) de (4),car cette dernière reste fixe,liée par les axes(12) du barillet.Le contact (41) est donc rompu.(5) se déplace avec le bras de telle sorte qu'elle reste préférentiellement contre la face (67)de (7) afin d'éviter tout dévissage accidentel des vis (57).

Les autres butées restent contre (68) et (69) des plaques (8) et (9).

Dés que le pneu reprend sa forme normale,grâce à son élasticité, il repousse le crampon vers l'extérieur,ainsi que (1) et la butée(5) et le contact (41) se rétablit.

Le mouvement se reproduit pour(1'),(2),(2'),(3),(3') suivant le même principe lorsqu'ils passent tour à tour dans la partie du pneu écrasé.

Le flambage du bras est ainsi évité,on peut donc envisager de les réaliser,par exemple,en alliage d'aluminium ou en polyamide de type chargé,par injection.Un bras est soumis, dans la partie située entre le crampon et le guidage dans les plaques, à une flexion vers l'avant du véhicule due à l'effort tangentiel à la roue exercé par le sol sur le crampon. La contrainte due à cette sollicitation est maximum dans la section la plus éloignée du crampon, juste au début du guidage dans la plaque. La poussée de (4) sur (5) évite de creuser des dents dans les bras, donc de diminuer leur section et de provoquer des concentrations de contraintes dans la zone la plus sollicitée. Ainsi les trous de fixation (59) qui permettent la fixation de (5) sur le bras ont été réalisés dans le plan médian de ces derniers, zone de contrainte nulle pour une sollicitation de flexion.

Afin d'éviter tout risque d'arc-boutement, pendant le déplacement radial du bras, dû au fait que le sol exerce un effort qui est décalé par rapport au plan de ce dernier, il est préférable que les plaques (7), (8), (9) puissent osciller de un à deux degrés autour d'axes contenus dans les plans des bras et perpendiculaires à l'axe longitudinal de ces derniers.

La figure 4 montre ces centrages oscillants. Le flasque (11) du barillet comporte une face périphérique en forme de calotte sphérique, sur laquelle la plaque (7) vient se centrer par l'intermédiaire d'une portée (6) en forme de tronc de cône, par exemple, cette disposition pouvant être inversée.

L'alésage cylindrique très court (26) permet de centrer (8) sur les axes (12) du barillet central.

(9) est centré sur le moyeu de commande (14) par l'alésage (28) et éventuellement sur le flasque (13) par l'alésage (27).

Comme (11), (12), (13), (14) sont toutes centrées par rapport à l'axe (10), les plaques (7), (8), (9), le seront également.

Lorsque les trois plaques (7), (8), (9) ne sont pas vérrouillées entre elles, elles peuvent donc tourner de 60° et 120° environ autour de (10) afin de permettre un rangement peu encombrant de l'appareil, les bras côte à côte.

Les butées ayant été fixées sur les faces opposées des bras, le chevauchement de ces derniers est possible.

(7), (8), (9) peuvent être vérrouillées entre elles pour

assurer l'angle de 60° entre les bras ,par un dispositif que l'on décrira plus loin.Dans cette situation, grâce aux jeux séparant les faces en vis àvis ,(34) et (33) des plaques (7) et (8) ,(36) et ( 42 ) des plaques (8) et (9), jeux crées par les rondelles entretoises (61), (7) peut osciller autour de la rotule (11),(8) autour du cylindre court (28) et l' ensemble (9), (10),(11), (13),(14) sur la portée tronc-conique (6) de la plaque (7).

Les plans (32),(33),(34),(35),(36) (37)guidant les bras s'inclinent donc aussi par rapport au plan vertical.

Cette disposition constructive permet de réduire la longueur des guidages des bras et des plaques.Les oscillations réduisent également les contraintes dans les plaques, les bras et l'usure dans les fonds (32),(35),(37),des rainures mais elles imposent un positionnement latéral précis des crampons par rapport au pneumatique positionnement qui sera expliqué plus loin.

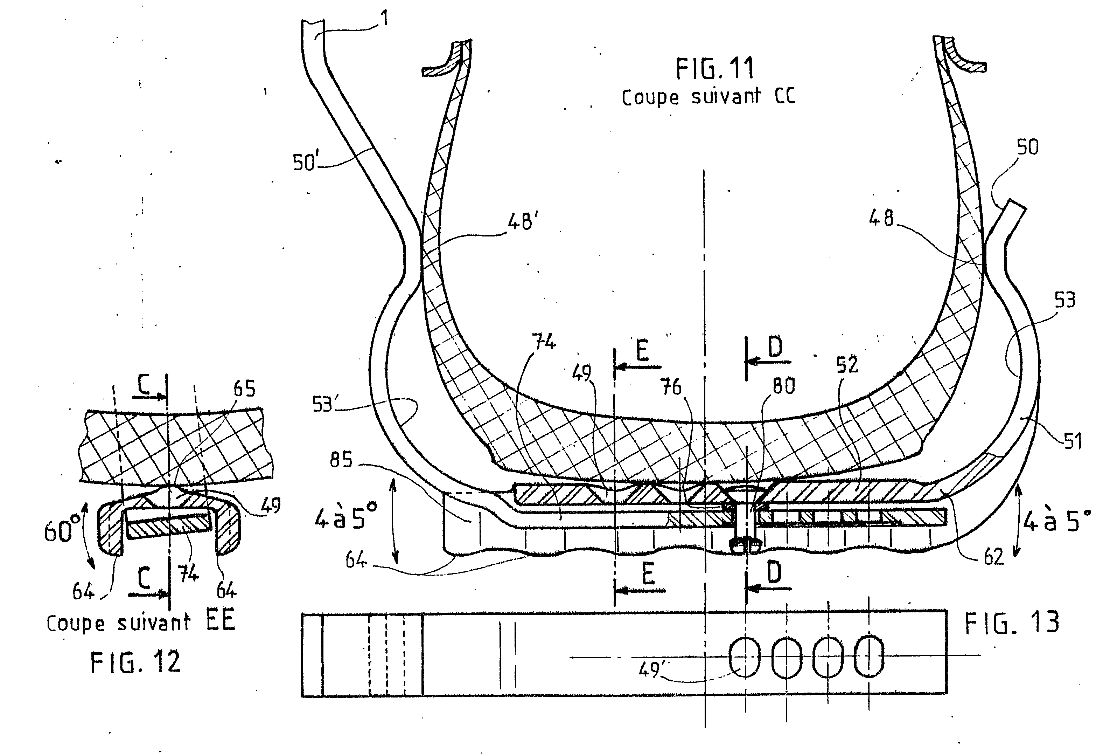

Lorsque l'inclinaison de (7) et (9) atteint 2° environ, le cylindre (72) entre en contact avec les axes (12).Ce contact limite l'inclinaison de (7) et (9) afin d'éviter un écart trop important des bras par rapport au plan vertical, ce qui rendrait leur mise en place difficile. L'inclinaison de (8), quant à elle,est limitée par le contact de ses faces(33) et (36) contre les plaques (7) et (9).Pour compléter ces dispositions, la figure 11 montre que chaque bras posséde un pliage incliné (50') et chaque crampon un bord recourbé vers le centre de la roue se terminant par une face inclinée (50). Ceci afin de faciliter l'engagement radial sur le pneu au moment du montage , lorsque (1) et (62) ne se présentent pas dans le plan de symétrie.

Le probléme posé par l'usure des faces parallèles des rainures (29),(29'), (30) ,(30'), (31),(31') en contact avec les champs des bras pendant leur mouvement alternatif lors de l'écrasement du pneu est résolu par deux moyens considérés ensemble ou séparément.

D'une part les surfaces en question,seront revêtues d'un matériau auto-lubrifiant (par exemple du polytétrafluoréthyléne ou téflon)et d'autre part des dispositions constructives réduisant les efforts exercés par les bras sur les faces des rainures.

La figure 20 montre un crampon faisant suite rigidement au bras correspondant selon la technique existante.Il se présente incliné à 30° environ par rapport au sol,car le bras correspondant est lui aussi incliné.La pression exercée par le pneumatique sur le dit crampon tend à redresser le bras, les faces des rainures (29),(29'),(30),(30') ,(31) ,(31') s'y opposent et cela se traduit par des efforts supplémentaires.

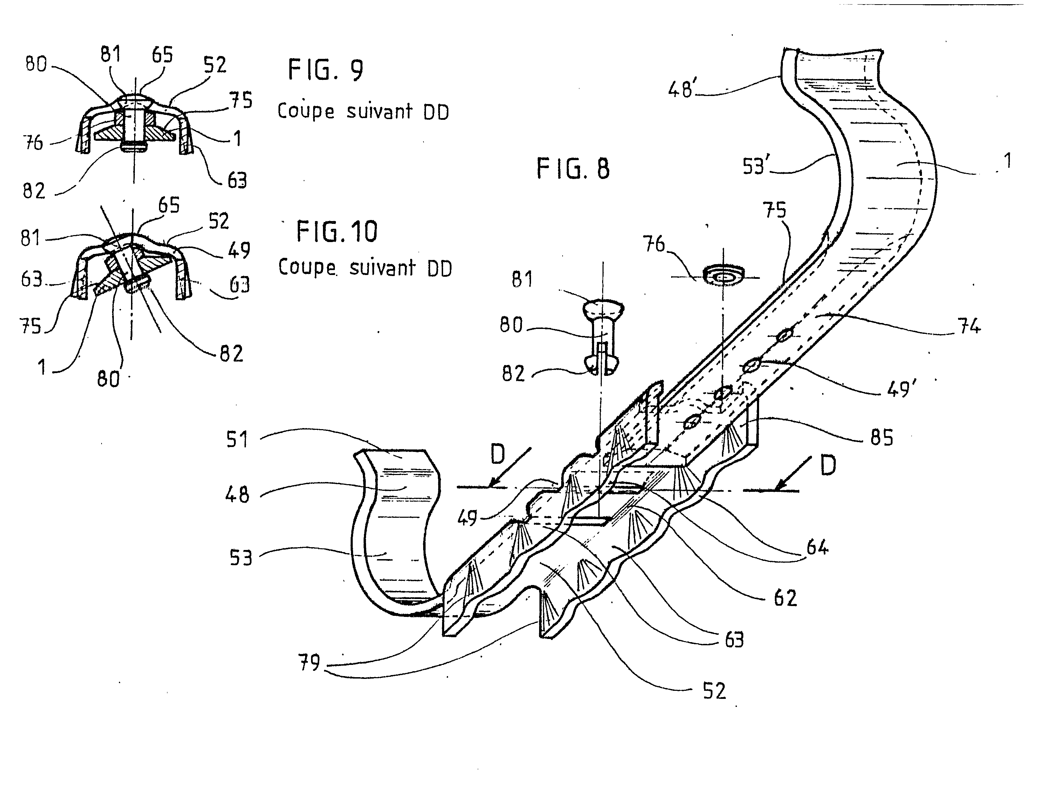

Les figures 8,9,10, montrent un dispositif,selon l'invention, de crampons oscillants par rapport au bras correspondant ,apportant un reméde au défaut signalé précédemment.

Cette liaison oscillante bras-crampons implique que les dits crampons (62) présentent,dans leur partie située entre la bande de roulement du pneumatique et le sol, une section en U . Les branches ( 63 ) sont tournées vers la route pour ne pas déchirer le pneumatique.

L' extrémité du bras(74) pliée parallélement à la bande de roulement est contenue entre les dites branches (63) avec un jeu latéral. (74) est en appui ponctuel sur le fond interne (52) du U ,le dit appui est réalisé,par exemple , par une rondelle (76) ,possédant au moins une face sphérique.

Les branches (63) ont une hauteur plus importante que celle de (74) inclinée,ainsi le poids du véhicule porte sur la face supérieure (52)et sur les branches (63).Les chamfreins (75) réalisés sur (74) réduisent sa hauteur inclinée.

Sur terrain dur ,(62) commence à appuyer sur le sol sur l'extrémité(64) d'une aile du U(fig 16)

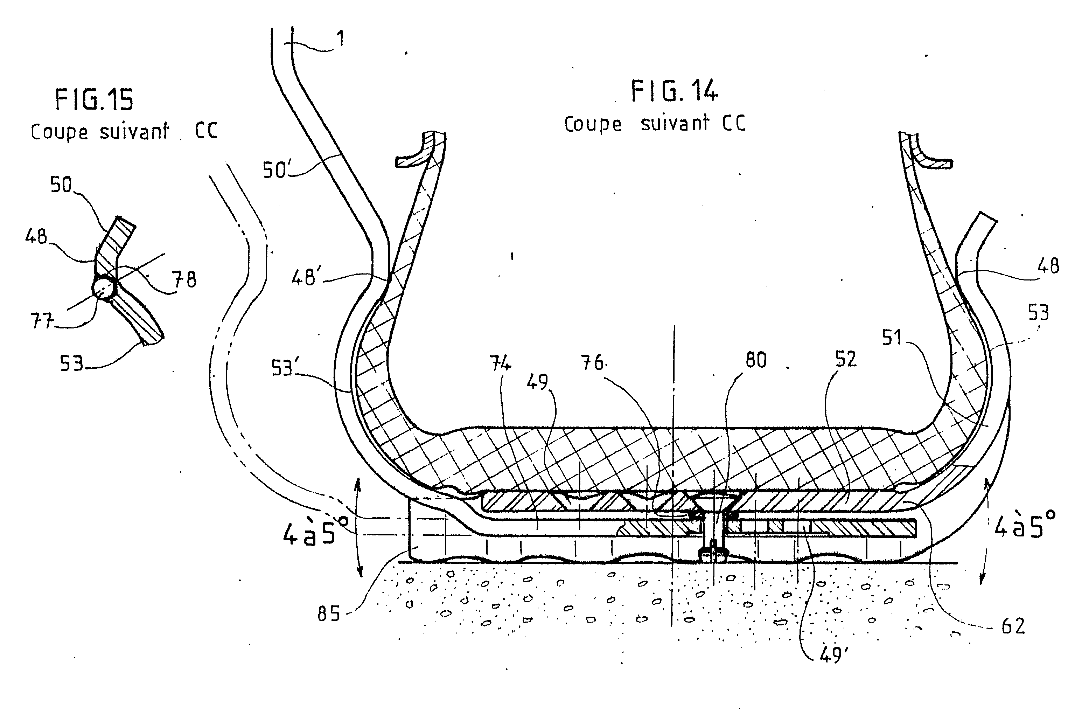

Dés que l'effort exercé par le pneumatique sur (52) passe à droite de (64),(62)pivote dans le sens T!et se met à plat sur ce dernier(fig 18) . Le pneu s'écrase ,gonfle latéralement et vient se loger dans la forme renflée (53) (FIG 14) appartenant à la partie relevée (51) de(62).La partie du bras en vis à vis présente un même renflement(53').Ainsi le pneu n'est pas pincé latéralement et (51) peut pivoter librement avec (62) sans frottement important sur le flanc du pneu.

La figure 11 montre que le crampon et le bras comportent,au dessus de (53) et(53'),des faces verticales (48)et (48')en contact avec la partie la plus renflée du pneu non écrasé,lorsque (52) est appliqué sur la bande de roulement. Ces contacts assurent le positionnement précis latéral des bras et des crampons que ne réalisent pas les plaques (7),(8), (9)à cause de leur oscillation.

Lors de l'écrasement du pneu, celui-ci glisse contre (48) et (48') vers le bas et gonfle latéralement dans (53) et (53')sans s'opposer au mouvement oscillatoire de (62).

Pour diminuer le frottement, il peut être envisagé un revêtement de polytétrafluoréthylène (téflon), par exemple, sur la face interne de (51) et du bras au niveau (48),(48'), (53),(53').

La figure 15 montre une variante de réalisation de (62). Afin de réduire encore le frottement latéral et radial, sur le flan du pneu,il a été monté une bille sphérique (77) pivotante dans un trou (78) ,sertie du côté interne de (51) dans la zone de contact (48).

La figure 8 montre une forme de réalisation préférentielle de (62).Cette forme est en tôle pliée avec un traitement de surface (un cadmiage ,par exemple).
Ce mode d'obtention donne une hauteur faible pour (62)et une finesse de (63) qui provoque une pression plus importante sur la neige gelée et un meilleur accrochage.Cette pression est encore augmentée par le fait que les extrémités des branches (63) sont découpées de façon ondulée dans le sens de la largeur du pneu.Les extrémités devront être trempées pour résister à l'usure de la route.les branches (63) présentent d'autre part des pliages latéraux (79) alternativement concaves et convexes,partant du fond du U et dont l'amplitude s'accentue au fur et à mesure que l'on se rapproche des extrémités de(63).Ces ondulations (79) s'opposent au glissement sur le côté du crampon dans la neige.

Le dispositif d'adhérence comportera,si on le désire, un jeu de crampons moulés ,plus hauts et plus épais, montables à la place des crampons en tôle pliée.Les branches (63) remontent latéralement contre la face externe de la partie recourbée(51) (voir fig 10,12,14,) .Ces crampons accrochent mieux dans la neige profonde.Sur ce genre de terrain,le crampon ,quelle que soit la forme de réalisation,pivote dans le sens 2 , inverse de celui du sens 1.(fig 17)

Pour cela ,la face du crampon (62),côté pneu, présente une partie bombée (65) sur toute la largeur de la bande de roulement.Deux faces (52) inclinées ,l'une vers l'avant,
l'autre vers l'arrière du véhicule,relient (65) aux branches
(63) du U en s'écartant progressivement du pneu.

L'effort radial exercé par le neige  sur les deux
branches (63)s'équilibre et le pivotement dans le sens 1
n'existe pas .Sous l'action de l'effort tangentiel,en marche
avant,la neige se glisse dans l'espace situé entre le pneu
et la face (52) inclinée en arrière et, par effet de coin,
fait pivoter (62) dans le sens 2.

Ce pivotement augmente la hauteur d'accrochage du
crampon.En marche arrière,l'effet de coin s'inverse ainsi
que le pivotement.

Dans toutes les positions de (62) l'effort tangentiel
est encaissé par l'une des branches (63)  en contact avec
le champ du bras.L'axe (80) a pour fonction de maintenir
le crampon(62) à la bonne largeur par rapport au bras(1)
et d'empêcher ces deux pièces de se désolidariser lors du
montage du dispositif.

Les figures (8),(9); (10)montrent un exemple de montage préférentiel de l'axe (80).

La face du crampon en contact avec le pneu comporte
plusieurs rainures débouchantes (49) ,en V,perpendiculaires
aux branches (63).La tête (81) de l'axe (80),une calotte
sphérique de préférence,vient prendre appui,de façon coulissante sur les faces inclinées de l'une des rainures.L'autre tête (82) ,rendue élastique par une fente ,a été engagée
dans l'un des trous cylindriques(49') réalisés dans la partie
(74) du bras ,et prend appui sur la face côté route  de la
dite partie (74). (82) comporte deux chanfreins de chaque
côté pour faciliter l'entrée et la sortie de l'axe. L'axe
(80) reste ainsi perpendiculaire au bras lors de l'inclinaison du  crampon.

La figure 18,par exemple,montre que l'on peut inverser
le positionnement angulaire de (80).A cette fin, il a été
percé dans (62)plusieurs trous cylindriques(49) et dans (74)
plusieurs trous oblongs(49').(80) s'incline alors avec le
crampon(62)

En déplaçant l'axe (80) dans( 49) et dans les trous (49') Il est possible de régler l'écartement de (48) par rapport à(48') suivant les différentes largeurs de pneumatiques.

Du côté du bras,les ailes (63) sont prolongées par les parties ( 85)pour correspondre à des bandes de roulement plus larges (fig 8 et 11).

L'axe (80)  et la rondelle d'appui (76) seront toujours montés décalés par rapport au plan médian du pneu,du côté opposé au bras .En effet, la bande de roulement  non comprimée étant légérement bombée, lorsque le crampon(62) vient en contact avec le milieu de cette dernière,le serrage désaxé du bras sur (76) provoque un léger pincement de la partie recourbée (51) sur le pneu au niveau du contact (48), par rotation de (62)autour de (76) et de (80).Cela positionne l'ensemble bras-crampon parfaitement dans l'axe de la bande de roulement.

Au montage, au contraire, lors du pivotement des bras, l'action du pneu sur (48) et (48')ouvre le crampon par rotation inverse autour de (76) et de (80) ce qui limite les frottements.Pendant cette opération,en effet,les crampons sont trés proches de la bande de roulement,car les crémailléres (4)ont une faible course  et les butées (5) sont fixées sur les bras.

Enfin,grâce à l'appui ponctuel sur (76),le crampon, une fois monté, peut suivre les déformations dissymétriques du pneumatique provoquées par les sols bombés ou en creux.

L'invention comporte également un systéme nouveau de vérrouillage des trois plaques (7),(8),(9) afin que les trois paires de bras (1),(1'),(2) (2'),(3),(3') forment des angles de 60° entre elles,lorsque le dispositif est monté sur le pneu ,sans pour autant supprimer l'oscillation latérale des plaques.

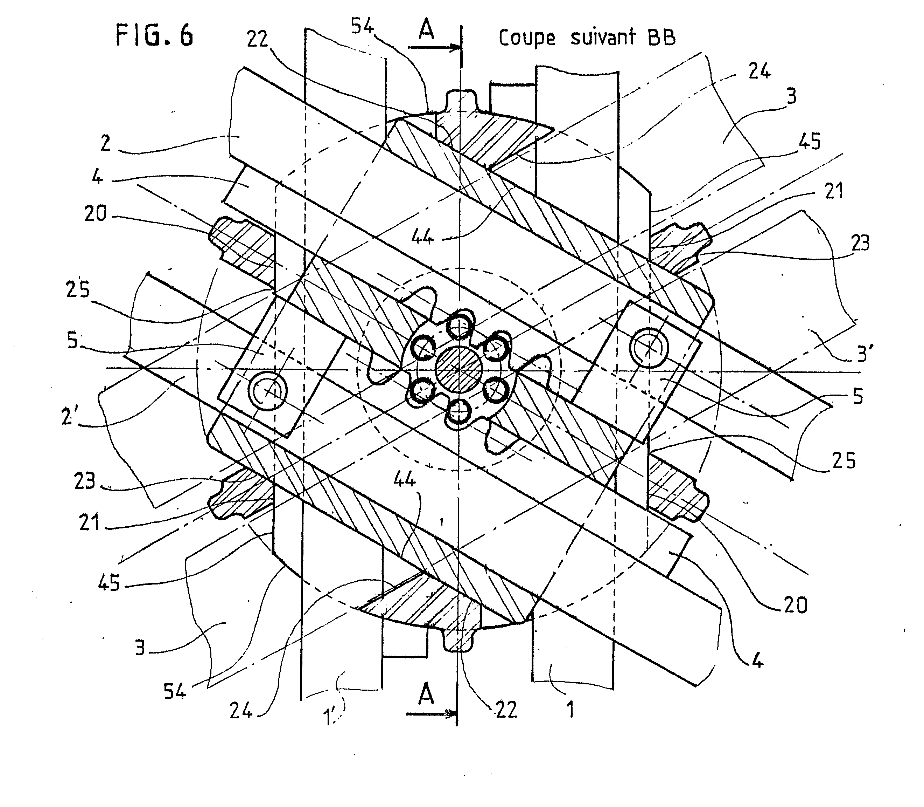

Ce vérrouillage est réalisé par des griffes appartenant à(9) et perpendiculaires à sa face (42) (fig 5 et 6). Ces griffes passent entre les crémaillères(4) et prennent appui sur les champs parallèles aux bras (44) et(45) de (7) et(8).

Pour dévérrouiller,l'utilisateur tourne le moyeu de commande(14) dans le sens  inverse des aiguilles d'une montre.La liaison hélicoïdale entre (14) et l'axe (10) réalisée par exemple par un filetage (66) de préférence à plusieurs filets,entraine un déplacement de (14) selon l'axe de (10) du côté opposé à la roue.

Ce déplacement entraine celui de (9) grâce à l'appui de l'anneau élastique (17),monté sur (14) contre le fond de l'alésage(27). Au cours de ce déplacement, le flasque (13) reste fixe et supprime toute translation selon l'axe de (10) de(7),(8) et des bras (3) et (3').Les surfaces (24) et les arêtes (25) empêchent les bras (3) et (3') de s'écarter et les crémaillères (4) de se désolidariser des axes (12) car, dans cette position, les bras (3) et (3') ne sont plus guidés par (31) et (31').Lorsque (14) entre en contact avec la rondelle d'appui(18) liée à l'axe (10) par le clou cannelé (19),les griffes ne sont plus en contact avec les champs (44) et (45).

L'utilisateur peut, à ce moment, amener (1),(1'), (2), (2'),(3),(3') côte à côte,trois par trois,et pousser sur les crampons en opposition,de façon à faire glisser les bras dans leurs rainures afin de les amener dans la position d'encombrement minimum.

Pour le montage,l'opérateur tire sur les crampons en opposition,les bras glissent dans leurs rainures et le contact (41) s'établit.(fig 1).

L'opération de vérrouillage des plaques 7 et 8 se fait en deux temps.

La figure 2 montre que l'utilisateur,dans un premier temps,soulève le bras 3 et le positionne à 60° environ par rapport à l'axe longitudinal du bras 2,en se repérant sur les griffes correspondantes.

Selon une forme de réalisation préférentielle,(fig4)il a été intercalé entre la face ( 39)de (9) et la face (40) de (14)un élément élastique très souple ( 84 )réalisé,par exemple, par une rondelle étoile de type Rigspan(marque déposée) . Lorsque (14) est en contact avec la rondelle d'appui (18), l'extrémité (47) des griffes touche la face (36),ce qui comprime (84).Lorsque (9) arrive dans une position proche du vérrouillage,les chanfreins (89)des griffes arrivent en face des chanfreins (88) des champs (44) et la rondelle (84) se Il est possible de régler l'écartement de (48) par rapport à(48') suivant les différentes largeurs de pneumatiques.

Du côté du bras,les ailes (63) sont prolongées par les parties ( 85)pour correspondre à des bandes de roulement plus larges (fig 8 et 11).

L'axe (80) et la rondelle d'appui (76) seront toujours montés décalés par rapport au plan médian du pneu,du côté opposé au bras .En effet, la bande de roulement non comprimée étant légérement bombée, lorsque le crampon(62) vient en contact avec le milieu de cette dernière,le serrage désaxé du bras sur (76) provoque un léger pincement de la partie recourbée (51) sur le pneu au niveau du contact (48), par rotation de (62)autour de (76) et de (80).Cela positionne l'ensemble bras-crampon parfaitement dans l'axe de la bande de roulement.

Au montage, au contraire, lors du pivotement des bras, l'action du pneu sur (48) et (48')ouvre le crampon par rotation inverse autour de (76) et de (80) ce qui limite les frottements.Pendant cette opération,en effet,les crampons sont trés proches de la bande de roulement,car les crémailléres (4)ont une faible course et les butées (5) sont fixées sur les bras.

Enfin,grâce à l'appui ponctuel sur (76),le crampon, une fois monté, peut suivre les déformations dissymétriques du pneumatique provoquées par les sols bombés ou en creux.

L'invention comporte également un systéme nouveau de vérrouillage des trois plaques (7),(8),(9) afin que les trois paires de bras (1),(1'),(2) (2'),(3),(3') forment des angles de 60° entre elles,lorsque le dispositif est monté sur le pneu ,sans pour autant supprimer l'oscillation latérale des plaques.

Ce vérrouillage est réalisé par des griffes appartenant à(9) et perpendiculaires à sa face (42) (fig 5 et 6). Ces griffes passent entre les crémaillères(4) et prennent appui sur les champs parallèles aux bras (44) et(45) de (7) et(8).

Pour dévérrouiller,l'utilisateur tourne le moyeu de commande(14) dans le sens inverse des aiguilles d'une montre.La liaison hélicoïdale entre (14) et l'axe (10) réalisée par exemple par un filetage (66) de préférence à plusieurs filets,entraine un déplacement de (14) selon l'axe de (10) du côté opposé à la roue.

Ce déplacement entraine celui de (9) grâce à l'appui de l'anneau élastique (17),monté sur (14) contre le fond de l'alésage(27). Au cours de ce déplacement, le flasque (13) reste fixe et supprime toute translation selon l'axe de (10) de(7),(8) et des bras (3) et (3').Les surfaces (24) et les arêtes (25) empêchent les bras (3) et (3') de s'écarter et les crémaillères (4) de se désolidariser des axes (12) car, dans cette position, les bras (3) et (3') ne sont plus guidés par (31) et (31').Lorsque (14) entre en contact avec la rondelle d'appui(18) liée à l'axe (10) par le clou cannelé (19),les griffes ne sont plus en contact avec les champs (44) et (45).

L'utilisateur peut, à ce moment, amener (1),(1'), (2), (2'),(3),(3') côte à côte,trois par trois,et pousser sur les crampons en opposition,de façon à faire glisser les bras dans leurs rainures afin de les amener dans la position d'encombrement minimum.

Pour le montage,l'opérateur tire sur les crampons en opposition,les bras glissent dans leurs rainures et le contact (41) s'établit.(fig 1).

L'opération de vérrouillage des plaques 7 et 8 se fait en deux temps.

La figure 2 montre que l'utilisateur,dans un premier temps,soulève le bras 3 et le positionne à 60° environ par rapport à l'axe longitudinal du bras 2,en se repérant sur les griffes correspondantes.

Selon une forme de réalisation préférentielle,(fig4)il a été intercalé entre la face ( 39)de (9) et la face (40) de (14)un élément élastique trés souple ( 84 )réalisé,par exemple, par une rondelle étoile de type Rigspan(marque déposée) . Lorsque (14) est en contact avec la rondelle d'appui (18), l'extrémité (47) des griffes touche la face (36),ce qui comprime (84).Lorsque (9) arrive dans une position proche du vérrouillage,les chanfreins (89)des griffes arrivent en face des chanfreins (88) des champs (44) et la rondelle (84) se détend en repoussant (9) vers (8) ce qui les positionne à 60°. L'utilisateur manoeuvre alors (14) dans le sens des aiguilles d'une montre et les surfaces (22),(23)entrent en contact avec les champs (44) de la plaque,(8)ce qui crée l' immobilisation angulaire,dans les deux sens,de (8) par rapport à (9). (fig.5 et6) .

Dans un deuxiéme temps(fig.3),l'utilisateur,sentant la compression de(84)provoquée par le contact(47)sur (34) de(7)(fig5), arrête de tourner(14)et déplace le bras(2) autour de l'axe(10), de façon à l'amener à 60° environ de l'axe longitudinal de (1). Lorsque la deuxième position de vérrouillage est trouvée,il reprend la manoeuvre de(14),dans le sens des aiguilles d'une montre ,ce qui amène les surfaces (20) et (21) des griffes en contact avec les champs parallèles (45) de (7).Cela immobilise angulairement (7) par rapport à (9).(fig.5 et 6)

Il est à noter que ce dispositif comporte deux sécurités.D'une part ,la forme arrondie (54) de (7)ne pourra jamais se glisser entre les surfaces (20),ce qui empêche toute inversion dans les vérrouillages de(7)et(8).D'autre part, si l'utilisateur continue de manoeuvrer(14),aprés avoir réalisé le vérrouillage de (8),mais sans avoir décalé (7), les extrémités des griffes (47) entrent en contact avec les bras (1) et(1') et le dispositif se bloque aussitôt.

C'est l'organe de commande (14)dans sa position rapprochée des plaques (7) et(8)qui assure le maintien du vérrouillage.Dans cette position,la rondelle élastique trés souple (84 ) est détendue.

Il sera nécessaire de nervurer les griffes et la face externe de (9) pour leur assurer une bonne rigidité.La figure 21 montre un exemple possible de nervures rayonnantes (70) combinées avec une colerette périphérique (71).

Il est à noter que ,pendant l'opération de vérrouillage,les bras (1)(1'),(2),(2'),(3) ,(3') ne se déplacent pas longitudinalement et ne sont donc pas en contact avec la bande de roulement du pneumatique et que le crampon(62) est légèrement ouvert.

L'utilisateur peut donc les manoeuvrer angulairement facilement pour rechercher l'angle correct de vérrouillage.

En effet, la figure 4 montre que ,tant que le vérrouillage n'est pas terminé,la face (46) de (14) n'est pas en contact avec le systéme à friction. Ce systéme est réalisé ici   par une ou plusieurs rondelles élastiques tronc-coniques (16)de type "Belleville",centrées sur (10) et dont la grande face est appliquée préférentiellement contre le flasque (13) du barillet.Cette disposition permet de réduire  au minimum le diamètre de la face (46) et celui de la rondelle élastique ( 84).

Dés que (16) est comprimée entre (13) et (14), grâce à l'adhérence  qui existe entre ces piéces ,le barillet (10), (11),(12) ,(13) se met à tourner avec (14) et les bras se déplacent jusqu'à ce que le bombé (65) du crampon (62) vienne en contact avec la bande de roulement du pneu.A ce moment, les bras ne peuvent plus se déplacer,l'ensemble (10),(11), (12),(13) s'immobilise, alors que l'utilisateur continue de tourner (14) dans le sens des aiguilles d'une montre  grâce à la poignée rigide (15).

La dite poignée peut être prolongée par un tube amovible (73) lié en rotation à (15) par deux plats (86)afin d'augmenter le couple de serrage.Il se produit alors un léger glissement relatif entre (14) et (10) qui, grâce à la liaison hélicoïdale entre ces deux piéces,provoque un nouveau déplacement axial de(14) qui comprime davantage (16) et augmente donc le couple de frottement et la force de serrage sur le bras.

Pendant ce déplacement,la plaque(9) se rapproche de la plaque (8),mais le jeu existant entre les faces en vis à vis (42) et(36) a été prévu pour éviter tout pincement des plaques entre elles,ce qui introduirait aussitôt un effort parasite sur (6) et sur (46).Ainsi tout l'effort de l'utilisateur est transmis aux bras ce qui donne un serrage trés efficace.

(15)comporte une liaison pivotante par rapport à (14),réalisée préférentiellement autour de son axe longitudinal,grâce à une extrémité filetée (87 )venant s'engager dans un trou  taraudé  de (14).Cette poignée comporte un crochet (55).Lorsque l'utilisateur  fait tourner  (14),le crochet est pivoté de telle sorte  qu'il n'accroche pas les nervures (70) de (9) (fig 21).

Lorsque le serrage a atteint la valeur désirée,l'utilisateur tourne (15) dans le sens (1) et accroche (55) sur (70) (figure 22).

Si (55) ne tombe pas en face d'une nervure (70), l'utilisateur peut forcer davantage sur la poignée (15),afin de provoquer un glissement entre l'organe de friction (16) et (14) et une nouvelle rotation de (14) par rapport à (10) pour arriver à la nervure suivante. (16) évite donc, de ce fait, l'utilisation d'une poignée élastique.

Lorsque (55) est accroché,l'utilisateur lâche la poignée. Le pneumatique,qui a été comprimé légèrement par les six bras,les repousse vers l'extérieur. Le mécanisme à barrillet étant réversible, (14) tourne légèrement dans le sens inverse et(55)est plaqué contre la nervure (70).(fig 22)

La force exercée par cette dernière sur (55) n'est pas concourante avec l'axe de (15), elle a donc tendance à faire pivoter (15) dans le sens 1. Le talon (56) prend à ce moment appui sur la colerette (71) et s'oppose à cette rotation.

Pour démonter le dispositif,l'utilisateur, en agissant sur (15), fait légèrement tourner (14) dans le sens du serrage de façon à rompre le contact de (55) avec (70).

Il est à noter que ce petit mouvement constitue une sécurité contre le décrochage accidentel de (55) .

L'utilisateur peut ensuite tourner (15) dans le sens inverse de l'accrochage, dégager le crochet (55) des nervures et tourner (14) dans le sens inverse des aiguilles d'une montre pour relâcher la tension des bras. Les crémaillères (4) se déplacent en translation et arrivent en fin de course réalisée par la fin du taillage des dents (43) contre les axes (12). Le barrillet (10), (11), (12), (13) s'immobilise alors en rotation.

Afin d'accélérer la manoeuvre, les crémaillères ne seront taillées que sur 30 millimètres environ.

L'utilisateur augmente son effort de désserrage sur (15) ce qui provoque le glissement de (14) par rapport au système à friction (16). Ce dernier se détend et (14) continue à tourner librement sur (10), entrainant (9) en translation vers le côté externe à la roue,ce qui déverrouille les plaques (7), (8), (9) entre elles.

L'utilisateur peut alors ranger le dispositif comme il a été expliqué auparavant.

Bien entendu,     différentes modifications peuvent être apportées,tant à la forme qu'à la disposition des éléments constructifs décrits, sans sortir du cadre de l'invention .Par exemple,le nombre des crampons (62) et des bras peut être réduit à quatre en supprimant la plaque intermédiaire (8) et les surfaces (22), (23) qui assurent le vérrouillage de (8) (figure 24).Dans ce cas , le vérrouillage des bras se fait à 90° en un seul temps .Les axes (80) de liaison des crampons (62) et des bras peuvent être remplacés par une douille engagée dans (49) et (49'),la tête en appui sur la rainure (49),et un clou cannelé engagé dans la douille, dont la tête maintient une rondelle contre la face externe de la partie (74) du bras,le dit clou pouvant être chassé de la douille pour effectuer le réglage latéral de la position de(62).Ce type de fixation peut-être utilisé pour lier également la butée (5) et le bras correspondant.

L'axe (80) peut  également être, soit  inclus dans la partie (74) du bras au moment du moulage, soit  soudé sur cette dernière ,la tête élastique étant dirigée vers le pneu et s'engageant avec jeu dans l'une des rainures (49) du crampon (62) (fig 27).Dans ce cas, l'appui ponctuel (76) est lié au bras, appui constitué soit par un bossage sur (74) ,soit par une colerette sur l'axe (80).

Dans le cas où le nombre des bras est réduit à quatre,et pour ne pas diminuer la stabilité du dispositif par rapport à la roue et la continuité d'accrochage qu'apporte le dispositif à six bras,toujours dans le cadre de l'invention,il peut être envisagé d'ajouter une paire de crampons transversaux (88) et (88') reliés de part et d'autre aux faces  externes latérales (63) du crampon (62) par les branches (89)et (89') disposées soit parallèles , soit concourantes avec l'axe longitudinal de la bande de roulement(Fig 25).Pour des questions de solidité,il peut être rajouté des branches (89'') et (89''')parallèles ou concourantes avec (89)et (89').

Par la suite,seule la branche(89) et le crampon(88) seront décrits en détail.

Le crampon(88) est constitué d'une plaque dont la grande face est disposée perpendiculairement et transversalement à la bande de roulement pour assurer un bon accrochage et dont la longueur est plus faible que la distance qui sépare les faces (48) et (48') de façon à pouvoir amener les crampons (62) côte à côte au pliage et au montage.

Cette disposition trés plate du dispositif permet, malgré la présence des crampons(88),de l'engager sous les carrosseries des véhicules actuels avant de le déplier autour du pneumatique.

Le crampon (88) comporte,dans sa partie supérieure, une nervure horizontale(92) qui augmente sa rigidité.

La branche (89),dans une forme de réalisation préférentielle mais non exclusive,a sa grande face disposée verticalement pour apporter une stabilité d'accrochage latérale du véhicule dans les virages.

Les efforts latéraux encaissés par cette branche (89) étant transmis au crampon (62) et à l'axe (80), pour éviter la sollicitation de cisaillement sur ce dernier , la face tournée vers le pneu de la partie (74) du bras,comporte au moins deux lardons (90) et(90'),disposés transversalement par rapport à (74) et pénétrant dans les rainures(49) du crampon (62) (fig 27).Lors des oscillations latérales du crampon autour de (80) dans le sens des aiguilles d'une montre ,c'est le lardon (90) de droite qui agit car le lardon (90') sort partiellement de sa rainure(49),dans la rotation inverse c'est surtout (90') qui agit.Selon un mode de réalisation des bras par moulage par injection, les lardons (90) et (90') seront soit monobloc, soit inclus dans ces derniers.Si les bras sont formés par pliage,(90) et(90') seront rapportés sur ces derniers par soudage ou soudo-brasage.

Afin de s'adapter au diamètre du pneumatique et d'apporter ainsi une meilleure stabilité du dispositif sur la roue,dans une forme de réalisation préférentielle,le champ supérieur de la plaque(89) présente une courbure telle

que ,lors du serrage des bras, les champs de (88) et de (88') et le bombé (65) du crampon (62) sont simultanément en contact avec le pneumatique(fig 29).Ainsi ,tout glissement du dispositif vers le haut,lorsqu'un bras est en contact avec le sol,est impossible.

Afin d'épouser différents diamètres,et de pouvoir se mettre à plat lorsque les crampons (88),(88') et (62) sont en contact avec un sol dur , la branche (89) présente une géométrie déformable réalisée, par exemple, par des plis verticaux (93) disposés en zig-zag longitudinalement, plis qui produisent un effet d'accordéon.(fig 26).Ces plis peuvent être remplacés ou associés aux entailles verticales (94) disposées alternativement à partir des champs supérieur et inférieur à la branche (89),approximativement sur une mi-hauteur (fig 29).

La partie (74) du bras présente un pli (96) de trois à quatre degrés qui l'éloigne de la bande de roulement du coté du bras vertical,ainsi ,on pourra admettre que le serrage désaxé exercé par l'appui ponctuel (76)sur le crampon (62) se traduise par une inclinaison de deux à trois degrés environ de ce dernier et de (88) par rapport à l'horizontale lorsque la face (48) est en contact avec le flanc latéral du pneu.Lorsque le crampon (88) touche le sol horizontal , il pivote en entrainant (62) dans le sens inverse des aiguilles d'une montre autour de (76),ce qui aura pour conséquence de rompre le contact (48) sur le flanc latéral du pneu,et d'éviter ainsi les frottements lors du gonflement latéral de ce dernier .La partie (74) du bras présente ,par ailleurs, un pli (97) qui la remet à l'horizontale sous la partie du crampon(62) qui ne posséde pas le fond (52).Pour rendre les ailes (85) plus rigides,il sera possible de nervurer les faces externes de ces dernières.Ainsi,on pourra accroitre le débattement angulaire latéral du crampon(62) sans augmenter notablement la hauteur de ses branches (63)et (85).Enfin, la partie (74) du bras présente à son extrémité un pli (98) vers le bas de façon telle que la dite partie touche le sol lorsque le crampon est incliné au maximum sur les sols bombés, pour éviter la sortie de l'axe (80) de la rainure (49). (fig.27)

0147272

Lorsque le crampon (88) est déjà pincé entre le pneu et le sol mais que le crampon (62) est à droite du début de la zone d'écrasement (95) du pneu (fig.29) la branche (89) est fléchie. Quand le crampon (62) est à son tour entre le pneu et le sol ,(62) se met à plat sur la route ,par rotation autour d'un axe transversal, en entrainant la branche (89') et le crampon (88').Ces derniers prennent contact avec le sol avant qu'ils ne soient pincés par le pneu ,ce qui augmente la longueur effective de l'accrochage.Le même phénomène se produit lors de la rupture du contact avec le sol.

Afin de réduire les déformations de compression ou d'extension des branches (89) et (89'),dûes à l'effort tangentiel exercé par l'accrochage des crampons (88) et(88'),il sera disposé une paroi horizontale (91) sensiblement à mi-hauteur de (89) et(89').Cette paroi ,disposée dans l'axe neutre de ces branches ne réduit pas leur souplesse de flexion.(fig.26) Selon un premier mode de réalisation, l'ensemble (62),(88) (88'),(89),(89') sera en matière plastique par moulage par injection.(fig.25)

Selon un deuxième mode de réalisation,il sera en acier,les éléments (62),(88),(88'),(89),(89') étant assemblés par soudage ,par exemple.La branche (89) subira un traitement thermique pour lui donner davantage de souplesse et ne possédera pas la nervure (91).

Selon un troisième mode de réalisation,une bande d'acier réalisera le crampon transversal (88), la branche (89) lui fera suite par un pliage (99) à 45° environ à son extrémité opposée au bras, puis la branche latérale (63) du crampon (62) par un pliage (100) à 45° dans l'autre sens. De même pour (88') (89') et l'autre branche (63).Les deux branches (63) seront soit pliées de part et d'autre par rapport au fond (52) ,soit soudées sur ce dernier,lui-même réalisé par une plaque d'acier dont l'extrémité est recourbée pour former le renflement (53) et la face (48) (fig 30) .Dans ce mode de réalisation, il sera possible d'utiliser l'elasticité de torsion de la branche (89) et de celle de (63)

Selon un quatrième mode de réalisation de l'invention,la branche (89) peut être rigide et rectiligne .Dans ce cas,le serrage du bras applique seulement le bombé (65) du crampon (62) sur le

pneu (fig 2b).Le contact de (88) sur le sol l'applique sur la roue par rotation de (62) autour d'un axe transversal. Pendant ce mouvement,la branche (89) roule sur la bande de roulement et son extrémité reliée a (62) se décole en provoquant une rotation de (62) autour d'un axe longitudinal passant par l'appui ponctuel (76).

Selon une variante de réalisation moulée,les crampons(88) et (88')et éventuellement les branches (89) et (89')auront une largeur plus importante pour permettre une inclusion de lames d'acier ou de clous en carbure de tungstène,pour améliorer l'accrochage sur neige gelée.

REVENDICATIONS

1°) Dispositif antidérapant adaptable rapidement sur roues de véhicule, comportant des crampons montés sur des bras radiaux rigides et articulés autour d'un axe central pour le montage et le rangement, les dits bras étant guidés longitudinalement dans un boitier central composé d'au moins deux parties pouvant tourner l'une par rapport à l'autre et se vérrouiller angulairement, les dits bras étant commandés en déplacement longitudinal par un systè_ me pignon - crémaillère manoeuvré à partir d'un organe externe possèdant une poignée, dispositif caractèrisé en ce que chaque crémaillère de commande (4) du bras correspondant est indépendante de ce dernier et comporte une liaison uni-directionnelle avec lui, dans le sens du serrage uniquement, par appui sur une butée (5) fixée sur le dit bras, chaque crémaillère (4) étant guidée dans la même rainure que le bras, et en ce que sont prévus, d'une part des moyens s'opposant à l'arc-boutement des faces des bras radiaux dans les dites rainures, et d'autre part, des moyens destinés à réduire l'usure des surfaces des rainures en contact avec les bras lors du déplacement longitudinal de ces derniers, quand le crampon est en contact avec le sol et que le pneu s'écrase.

2°) Dispositif suivant la revendication 1 caractérisé par la présence d'un moyen de réglage de la position de la butée (5) suivant les différents diamètres de pneumatiques constitué, par exemple, par mise en correspondance d'un trou (83) réalisé dans (5) avec l'un des trous (59) disposés dans le plan médian des bras, et d'une vis (57) traversant de part en part ces deux pièces, le contact (60) de (5) sur le champ du bras empéchant la dite butée de tourner autour de (57).

3°) Dispositif suivant la revendication 1 caractérisé en ce que le dispositif limitant l'arc_boutement des bras dans leur rainure de guidage est réalisé par le montage oscillant par rapport à l'axe central (10) des parties composant le boitier central, par exemple par la rotule (11) et le cylindre court (26) et les rondelles entretoises (61).

4°)Dispositif suivant la revendication 1 caractérisé en ce que la réduction de l'usure entre les bras radiaux et leurs rainures de guidage est obtenue par une constitution en deux parties articulées,suivant deux directions, des bras et des crampons (62), de telle sorte que le poids du véhicule soit uniquement appliqué à la partie crampon.Pour cela, la partie (74)du bras pliée parallèlement et transversalement à la bande de roulement du pneumatique est contenue,avec jeu, entre les branches (63) d'une section en forme de U ,par exemple,du crampon (62),la dite section en U ayant ses branches (63) tournées vers le sol,et l'extrémité(74) du bras appuyant ponctuellement sur son fond interne (52)par l'intermédiaire d'une rondelle (76).La face externe de (52)comporte un bombé (65) en appui sur la bande de roulement,permettant l'oscillation de (62)et deux surfaces inclinées symétriquement reliant (65) aux branches (63).(62)et le bras sont reliés par un axe (80) passant dans un trou (49') réalisé perpendiculairement à (74)et dans une rainure (49) appartenant à (52).La partie crampon est prolongée du côté opposé au bras par une partie (51)recourbée contre le flanc du pneu.

5°)Dispositif suivant les revendications 3 et4 caractérisé en ce que la partie(51) du crampon comporte une face verticale(48) appliquée sur la partie la plus renflée du flanc du pneu, par le serrage du bras sur la rondelle (76) et le fond(52), la dite rondelle (76)et l'axe (80)étant montés décalés par rapport au plan médian du pneu,du côté opposé au bras,le contact (48)étant rompu dès que le serrage du bras cesse au démontage ou au montage,par ouverture de (62) autour de(76) et(80),et en ce que la dite partie (51)comporte,par ailleurs,un renflement plus large(53) de forme arrondie, situé entre (48) et la bande de roulement ,permettant au pneu de gonfler latéralement lors de son écrasement,la partie du bras correspondante possédant ,par raison de symétrie, la face verticale (48')et la partie renflée (53').

6°)Dispositif selon la revendication 4 . caractérisé en ce que la partie (74) du bras parallèle à la bande de roulement et la partie (52) du crampon comportent plusieurs trous(49') et plusieurs rainures (49)permettant un réglage de la distance séparant les faces (48) et (48') suivant différentes largeurs de pneus.

7°) Dispositif suivant la revendication 3 caractérisé en ce que les parties constituant le boitier central ont la configuration de plaques minces comportant chacune deux rainures parallèles (29), (32) ; (30), (35) ; (31) et (37) débouchant latéralement sur leurs grandes faces (34), (33), (42) et pouvant s'obtenir par fonderie sans noyau, ou par emboutissage.

8°) Dispositif suivant les revendications 3 et 7 caractérisé en ce qu'il comporte trois plaques (7),(8),(9),chacune guidant une paire de bras,ce nombre pouvant être réduit à deux plaques(7)et(9) chacune guidant une paire de bras, ceci à des fins de simplification technologiques.

9°) Dispositif suivant les revendications 3, 7 et 8 caractérisé en ce que le vérrouillage angulaire des bras (1), (1'), (2), (2'), (3), (3') et des plaques (7), (8), (9) est assuré par des griffes appartenant à la plaque extérieure (9) perpendiculaires au plan (42) de cette dernière, en contact avec les champs (44) et (45) parallèles aux bras de chaque plaque (7) et (8),et en ce que la plaque(9)est commandée en déplacement axial,dans les deux sens,par rotation d'un organe de manoeuvre (14), une rondelle élastique (84) comprimée entre (9) et (14) facilitant l'engagement des griffes sur (44) et (45) et se détendant ensuite .

10°) Dispositif suivant la revendication 1 caractérisé en ce que le déplacement des crémaillères (4) est commandé par un mécanisme à barillet (10), (11), (12), (13) comportant autant d'axes (12) que de bras, les dits axes (12) étant montés dans des trous percés dans le flasque (11) et la rondelle d'appui (13) et disposés à espace régulier sur un cercle de petit diamètre.

11°) Dispositif suivant les revendications 3 et 9 caractérisé en ce que l'effort de serrage appliqué sur l'organe de manoeuvre (14) est transmis au barillet, sans exercer d'effort axial sur les plaques (7), (8), (9) grâce à un mécanisme à friction constitué, par exemple, d'une ou plusieurs rondelles élastiques tronc-coniques (16) placées entre le flasque d'appui (13) et l'organe de manoeuvre (14).

12°) Dispositif suivant la revendication 11 caractérisé en ce que le mécanisme à friction (16) permet un glissement angulaire de l'organe de manoeuvre (14) par rapport au barillet, les bras étant serrés sur le pneu, glissement autorisant à un crochet (55) solidaire d'une poignée rigide (15), de venir en appui sur l'une des nervures (70) de (9) aprés rotation autour de l'axe longitudinal de la dite poignée ; le talon (56) en contact avec la colerette (71) de (9) arrêtant sa rotation. .

13°) Dispositif selon les revendications 4,5,6, caractérisé en ce que ,au moins deux crampons (88) et (88') ayant la configuration de plaques, sont liés de part et d'autre du crampon (62) , parallèlement aux branches (63) de ce dernier , le moyen de liaison des dits crampons étant constitué ,par exemple ,par deux branches (89) et (89') au moins, disposées longitudinalelent ou obliquement à la bande de roulement et liées par leurs extrémités d'un coté aux branches (63) et de l'autre aux faces de (88) et (88') ; et en ce que au moins deux lardons (90) et (90') sont liés à la partie (74) du bras , sur la face tournée vers le pneu, les dits lardons pénétrant dans les rainures (49) du crampon (62).

14°) Dispositif selon la revendication 13, caractérisé en ce que les branches (89) et (89') comportent des moyens rendant leur géométrie déformable ,par exemple des plis verticaux (93) disposés en zig-zag les uns derrière les autres dans le sens longitudinal des dites branches ,et une paroi horizontale (91) située à mi-hauteur de (89) et (89') et éventuellement des entailles verticales (94) disposées alternativement à partir des champs supérieur et inferieur des branches (89) et (89').

0147272

FIG.1

FIG.2

FIG.3

FIG.4
Coupe suivant AA

FIG.5

FIG. 6     Coupe suivant BB

4 / 14

0147272

0147272

FIG.7

FIG. 7

FIG. 9
Coupe suivant DD

FIG. 8

FIG.10
Coupe suivant DD

FIG. 11
Coupe suivant CC

50'
48'
74
49
53'
85
4 à 5°
64

1

53
48
52
51
76
80
62
4 à 5°

7/14

C
65
60°
49
64
74
64
Coupe suivant EE
FIG. 12

49'
FIG. 13

0147272

FIG.15
Coupe suivant CC

FIG.14
Coupe suivant CC

50

48

78

77

53

1

50'

48'

53'

4 à 5°

85

74

49

76

80

52

51

48

53

4 à 5°

49'

62

8/14

0147272

FIG. 16.

FIG. 17

FIG.18

FIG. 20

FIG. 19

FIG. 21

FIG. 22

FIG. 23

10/14

0147272

FIG. 24

FIG.25'

48

53

49

89'

88'

F

62

63

89''''

92'

88

89

91

89''

85

48'

98

3°à 4°

90'

80

74

90

75

FIG.26
Coupe suivant FF

93

91

12/14

0147272

0147272

Fig. 27

Coupe suivant CC

FIG. 30

48

53

63

99

88

100

89

88'

89'

FIG. 28

Coupe suivant GG

88'

65

62

63

88

89

FIG. 29

Coupe suivant GG

88'

65

94

89'

91

94

62

88

63

95

89

14 / 14

0147272

Office européen
des brevets

**RAPPORT DE RECHERCHE EUROPEENNE**

Numéro de la demande

EP 84 40 2430

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | CH-A- 497 988 (SUTTER)<br>* Colonne 3, lignes 3-9, 36-45; figures 1,2 * | 1,2,4 | B 60 C 27/04<br>B 60 C 27/10<br>B 60 C 27/08 |
| Y | US-A-1 523 330 (WOODWORTH)<br>* Page 2, lignes 68-87; figures 2,5,7 * | 1,4 | |
| Y | US-A-3 053 302 (BOPST)<br>* Colonne 2, lignes 66-70; colonne 3, lignes 51-70; figures 1,3,6 * | 1,2 | |
| A | US-A-4 209 049 (REGENSBURGER)<br>* Colonne 2, lignes 12-47; figures 1-4 * | 1 | |
| A | FR-A-2 347 220 (ELKEM-SPIGERVERKET) | | DOMAINES TECHNIQUES RECHERCHES (Int. Cl.4)<br><br>B 60 C 27 |
| A | DE-A-2 653 761 (SPRENGER) | | |

Le présent rapport de recherche a été établi pour toutes les revendications

| Lieu de la recherche | Date d'achèvement de la recherche | Examinateur |
|---|---|---|
| LA HAYE | 01-03-1985 | AYITER I. |